Europäisches Patentamt

European Patent Office

Office européen des brevets

(19)

(11) **EP 0 589 558 B1**

(12) **EUROPEAN PATENT SPECIFICATION**

(45) Date of publication and mention
of the grant of the patent:
**29.10.1997 Bulletin 1997/44**

(51) Int Cl.$^6$: **G03H 1/26**, G03H 1/08,
G03H 1/28, G03H 1/30

(21) Application number: **93306161.6**

(22) Date of filing: **04.08.1993**

(54) **Stereoscopic display method and display apparatus**

Stereoskopisches Anzeigeverfahren und Vorrichtung dazu

Méthode et dispositif d'affichage stéréoscopique

(84) Designated Contracting States:
**DE FR GB**

(30) Priority: **21.08.1992 JP 222588/92**

(43) Date of publication of application:
**30.03.1994 Bulletin 1994/13**

(73) Proprietor: **FUJITSU LIMITED**
**Kawasaki-shi, Kanagawa 211 (JP)**

(72) Inventors:
• **Kato, Masayuki, c/o Fujitsu Limited**
**Kawasaki-shi, Kanagawa 211 (JP)**
• **Aritake, Hirokazu, c/o Fujitsu Limited**
**Kawasaki-shi, Kanagawa 211 (JP)**
• **Ishimoto, Manabu, c/o FUJITSU LTD.,**
**Kawasaki-shi, Kanagawa, 211 (JP)**
• **Sato, Noriko, c/o FUJITSU LIMITED**
**Kawasaki-shi, Kanagawa, 211 (JP)**
• **Nakashima, Masato, c/o FUJITSU LIMITED**
**Kawasaki-shi, Kanagawa, 211 (JP)**

(74) Representative: **Godsill, John Kenneth et al**
**Haseltine Lake & Co.,**
**Imperial House,**
**15-19 Kingsway**
**London WC2B 6UD (GB)**

(56) References cited:
DE-A- 3 506 368    GB-A- 2 140 170
US-A- 3 614 426    US-A- 4 964 684
US-A- 5 022 727    US-A- 5 117 296

• APPLIED OPTICS vol. 10, no. 2 , February 1971 , NEW YORK US pages 403 - 411 Y. ICHIOKA ET AL. 'SCANNING HALFTONE PLOTTER AND COMPUTER-GENERATED CONTINUOUS-TONE HOLOGRAM'
• APPLIED OPTICS vol. 15, no. 11 , November 1976 , NEW YORK US pages 2722 - 2729 TOYOHIKO YATAGAI 'STEREOSCOPIC APPROACH TO 3-D DISPLAY USING COMPUTER-GENERATED HOLOGRAMS'
• IEEE PROCEEDINGS - 1990 SOUTHEASTCON vol. 2 , April 1990 , NEW ORLEANS pages 589 - 592 A.M. BUSQUETS ET AL. 'DEPTH-VIEWING VOLUME INCREASE BY COLLIMATION OF STEREO 3-D DISPLAYS'
• OPTICS COMMUNICATIONS vol. 82, no. 1/2 , 1 April 1991 , AMSTERDAM NL pages 6 - 11 P.W. MCOWAN ET AL. 'THREE-DIMENSIONAL STEREOSCOPIC DISPLAY USING RAY TRACED COMPUTER GENERATED HOLOGRAMS'
• OPTICS AND LASER TECHNOLOGY vol. 17, no. 1 , February 1985 , HAYWARDS HEATH GB pages 23 - 26 GUO-PING ZHOU 'THREE-DIMENSIONAL HOLOGRAPHIC RECONSTRUCTION OF TWO-DIMENSIONAL IMAGE INFORMATION FROM SERIAL SECTIONS AND ITS APPLICATIONS IN BIOMEDICINE'
• SOVIET PHYSICS DOKLADY vol. 34, no. 5 , May 1989 , NEW YORK US pages 473 - 475 N.F. KOVTONYUK 'GENERATION OF A THREE-DIMENSIONAL IMAGE AND HOLOGRAPHY OF NONCOMPACT OBJECTS'
• PROCEEDINGS OF THE SPIE vol. 1212 , 1990 , BELLINGHAM, (US) pages 116 - 135 STEPHEN J. HART ET AL. 'DISPLAY HOLOGRAPHY FOR MEDICAL TOMOGRAPHY'

EP 0 589 558 B1

- **SOVIET PHYSICS TECHNICAL PHYSICS vol. 20, no. 12 , December 1975 , NEW YORK US pages 1601 - 1610 YU.N. DENISYUK 'ASPECTOGRAMS AND COMPOSITE HOLOGRAMS'**

## Description

The present invention relates to the production of holograms for use in producing stereoscopic displays.

A stereoscopic display is a display for enabling depth or thickness of a three-dimensional object to be easily visually appreciated. Stereoscopic display is useful for the display of a structural object designed by CAD, or the like, and for the display of a medical image or the like. A three-dimensional image is also more impressive than a two-dimensional display, and this makes stereoscopic displays desirable for amusement in an amusement park, a cinema, or the like.

Various methods of stereoscopic display have been proposed. For example a hologram can be used. With holographic projection an observer can see a three-dimensional image without using special glasses. With holographic methods an object image is recorded by using light interference. Colour holograms giving an impression of depth have already been produced for static images. As another example computer graphics (CG) can allow a three-dimensional impression to be given to an observer. A virtual object having a three-dimensional structure is formed by CAD or the like. When the object is to be displayed on the computer screen as if viewed from a predetermined direction, a two-dimensional perspective image is calculated which takes account of appropriate reflection or shadows due to light. However, with computer graphics, the two-dimensional image does not convey a full stereoscopic impression.

It is possible to display an image of a three-dimensional object, giving a stereoscopic impression, by using a holographic stereogram system.

Two-dimensional images of an object as viewed from various directions are produced by a computer graphics system, and respective holograms of those images are sequentially recorded as strip-like regions of a composite hologram, each having a microwidth in the horizontal direction and extending completely across the composite hologram in the vertical direction.

Computer generated composite holograms can be used, to reconstruct an image of a three-dimensional object, as described in an article by Toyohiko Yatagai in Applied Optics, Volume 15, No. 11, pages 2722 to 2728 (Nov. 1976). In this method a sequence of perspective projections of the three-dimensional object to be displayed is calculated and corresponding holograms are generated by a computer and arranged in sequence to synthesize a composite hologram.

With such a conventional holographic stereogram, however, the surface at which the focal point of the observer's eyes is located may not coincide with the image position corresponding to parallax of the observer's eyes. Therefore the image is hard to see and fatigue results. Viewing such a displayed image having a large depth can be particularly burdensome on the eyes.

A conventional hologram is recorded onto a film-like medium and it takes time to develop the image. Such delay may be inconvenient in a stereoscopic display system. Further, the contents of such a display cannot be rewritten.

According to a first aspect of the present invention there is provided a method of producing a composite hologram for use in displaying a stereoscopic image of a three-dimensional subject located in an object space extending away from a hologram formation surface, the method comprising:

a) obtaining three-dimensional coordinate data representing the said subject;

b) defining a series of different spatial zones in the said object space, which zones span respective different ranges of distance from the hologram formation surface and contain respective different constituent parts of the said subject;

c) deriving, from the said three-dimensional coordinate data, individual three-dimensional coordinate data sets representing respectively the said different constituent parts;

d) defining for each of the said zones an individual projection plane;

e) employing the individual three-dimensional coordinate data sets to compute, for each in turn of a multiplicity of preselected different viewpoints (Pi) arrayed over the said hologram formation surface, individual depth image data sets representing respective two-dimensional perspective images of the said different constituent parts, each as projected from the viewpoint concerned onto the individual projection plane defined for the zone containing the constituent part concerned; and

f) employing the said depth image data sets in a process of forming a composite hologram made up of a multiplicity of different areal segments containing respective physical reproductions of individual segment holograms, each of which represents a two-dimensional image that is a combination of all the said perspective images pertaining to an individual one of the said different viewpoints (Pi), which reproductions are arrayed similarly to their respective corresponding viewpoints so that the composite hologram can be irradiated with a reproduction light beam to generate the desired stereoscopic image.

According to a second aspect of the present invention there is provided an apparatus for producing a composite hologram for use in displaying a stereoscopic image of a three-dimensional subject located in an object space extending away from a hologram formation surface, which apparatus comprises:

a) data-producing means for providing three-dimensional coordinate data representing the said subject;

b) zone-defining means for defining a series of different spatial zones in the said object space, which zones span respective different ranges of distance from the hologram formation surface and contain respective different constituent parts of the said subject;

c) data division means for deriving, from the said three-dimensional coordinate data, individual three-dimensional coordinate data sets representing respectively the said different constituent parts;

d) projection-plane defining means operable to define for each of the said zones an individual projection plane;

e) image-computing means for employing the said three-dimensional coordinate data sets to compute, for each in turn of a multiplicity of preselected different viewpoints (Pi) arrayed over the said hologram formation surface, individual depth image data sets representing respective two-dimensional perspective images of the said different constituent parts, each as projected from the viewpoint concerned onto the individual projection plane defined for the zone containing the constituent part concerned; and

f) hologram-forming means for employing the said depth image data sets to form a composite hologram made up of a multiplicity of different areal segments containing respective physical reproductions of individual segment holograms, each of which represents a two-dimensional image that is a combination of all the said perspective images pertaining to an individual one of the said different viewpoints (Pi), which reproductions are arrayed similarly to their respective corresponding viewpoints so that the composite hologram can be irradiated with a reproduction light beam to generate the desired stereoscopic image.

An embodiment of the present invention can be used to display a holographic image, for example a moving image, which can be viewed over long periods with little fatigue, the image being rewritten in a real-time manner.

Three-dimensional coordinate data for use in an embodiment of the invention can for example be formed from two-dimensional image input data obtained by photographing an object with a CCD camera or the like.

Embodiments of the invention can provide for hologram formation by multiple exposure of a recording medium to a plurality of two-dimensional images.

In an embodiment of the invention, three-dimensional information to be expressed is divided in the depth direction, a plurality of three-dimensional zones, or regions, are set, zone data indicative of the three-dimensional information of the object to be displayed is formed for each zone and a plurality of depth image data sets comprising the two-dimensional image data is formed for each zone. The zones in the depth direction can be set such that one zone is set separately for each object to be expressed or such that one object is divided into a plurality of portions, each portion being assigned to a different zone. A projection plane which is parallel with the hologram forming surface is set in each region, and projection data of an object or objects as seen from the hologram formation surface, projected onto the two-dimensional plane, is produced as two-dimensional depth image data. For each of a multiplicity of segment hologram areas constituted as minimum units obtained by dividing the hologram formation surface into small areal segments, phase is calculated on the basis of two-dimensional pixels of which the depth image is constructed, so as to form a phase distribution constituting a segment hologram at the hologram formation surface. The phase distributions obtained for each of the plurality of depth images are added to each segment hologram at the same position, thereby obtaining a phase distribution at the hologram forming surface of a synthesized depth image.

According to a further embodiment of the invention, the spatial phase distribution of a hologram is calculated from a plurality of two-dimensional depth images and the phase distribution obtained is expressed, i.e. reproduced in physical form, by means for spatially modulating the amplitude or phase of reproduction light. Rewritable stereoscopic display can be performed by optical wavefront conversion of a reproduction light beam. A plurality of depth images can be recorded in a multiplex manner on a recording medium by light interference exposure, to form each of the segment holograms. The segment holograms obtained are arranged and recorded on a hologram dry plate to form the composite hologram. Conventional holographic display techniques can then be applied to reproduce the holographic image from the recording medium. The fact that each segment hologram is based on a plurality of two-dimensional depth images, relating respectively to different depths of the object space, serves to reduce the difference between the distances at which an observer perceives an image to be located on the basis of eye parallax, on the one hand, and on the basis of eye focus (i.e. accommodation) on the other hand. Fatigue from viewing the holographic display can thus be decreased and, at the same time, a more natural three-dimensional representation is obtainable.

Thus an embodiment of the present invention can enable a more natural stereoscopic display to be realized, as compared with conventional holographic stereograms. A CAD system can be used to electronically form holograms from virtual objects, so that stereoscopic images can be rewritten and displayed in a short time. Furthermore, colour stereoscopic displays can also be readily achieved.

For a better understanding of the invention and to show how the same may be carried into effect, reference will now be made, by way of example, to the accompanying drawings, wherein:

Fig. 1 is a flowchart showing a processing procedure, used to produce a stereoscopic display, in accordance with a first embodiment of the invention;

Fig. 2 is a block diagram showing the construction of an apparatus for carrying out the procedure shown in Fig. 1;

Fig. 3 is a diagram illustrating an expressing format of three-dimensional structural data in a CAD system;

Fig. 4 is a diagram illustrating another expressing format of three-dimensional structural data in a CAD system;

Fig. 5 is a flowchart showing details of a depth image forming step of Fig. 1;

Fig. 6 is a perspective diagram showing division of an object space in a depth direction, there being a plurality of objects located in the space concerned;

Fig. 7 shows diagrammatically a side view of the arrangement of Fig. 6;

Fig. 8 is a perspective diagram showing division, in the depth direction, of an object space through which a single object extends;

Fig. 9 shows a side view corresponding to Fig. 8;

Fig. 10 is a diagram showing in side view a general example of depthwise division of an object space into different spatial zones, and the positions of projection planes which are defined respectively in those zones;

Fig. 11 is a perspective diagram illustrating formation of two-dimensional projection data for separate objects located at different depths;

Fig. 12 is a perspective diagram illustrating formation of two-dimensional projection data for a single object extending in the depth direction through a plurality of different depth zones;

Fig. 13 is a diagram illustrating two-dimensional projection data formed in accordance with Fig. 11;

Fig. 14 is diagram illustrating two-dimensional projection data formed in accordance with Fig. 12;

Figs. 15A and 15B are diagrams showing how the positions of two objects relate to the projection data, when two-dimensional projection data is formed;

Figs. 16A and 16B are diagrams corresponding respectively to Figs. 15A and 15B when the objects therein are rearranged;

Fig. 17 is a diagram illustrating principles of calculating a phase distribution for a Fresnel-type hologram;

Fig. 18 is a diagram illustrating formation of an image-type hologram;

Fig. 19 is a diagram illustrating how a calculation range for a phase distribution is limited in the formation of an image-type hologram;

Fig. 20 is a diagram showing the optical relationships, between a depth image display surface and a hologram formation surface used when calculating a phase distribution to display an enlarged three-dimensional image;

Fig. 21 is a diagram illustrating a condition in which an image is enlarged to be twice the size of that in Fig. 20;

Fig. 22 is a diagram showing the optical relationships between a depth image display surface and a hologram formation surface as a display position of a three-dimensional image is moved;

Fig. 23 is a diagram showing changes in phase distribution calculation points at a hologram formation surface as an image display position moves;

Fig. 24 is a diagram showing a perspective view of a stereoscopic display apparatus;

Fig. 25 is a sectional diagram showing internal features of the apparatus of Fig. 24;

Fig. 26 is a sectional diagram illustrating the structure of a liquid crystal display, of the transmission type, which may be used as a spatial light modulation device;

Fig. 27 is a diagram illustrating phase modulation of reproduction light by three liquid crystal cells of Fig. 26;

Fig. 28 is a schematic diagram of another stereoscopic display apparatus, using a spatial light modulation device of the reflection type;

Fig. 29 is a more detailed diagram of the reflection-type spatial light modulation device of Fig. 28;

Fig. 30 is a schematic diagram of a stereoscopic display apparatus using a spatial light modulation device of the optical writing type;

Fig. 31 is a sectional diagram showing structural details of the optical writing type spatial light modulation device of Fig. 30;

Fig. 32 is a perspective diagram of a stereoscopic display apparatus using an enlarging system;

Fig. 33 is a perspective diagram of a stereoscopic display apparatus using a spatial light modulation device and having a refractive hologram for preventing transmission of zeroth order light;

Fig. 34 is a schematic sectional diagram showing internal features of the apparatus of Fig. 30;

Fig. 35 is a schematic diagram of a stereoscopic display apparatus for providing a colour stereoscopic display using two colour components (R and G);

Fig. 36 is a schematic diagram of a stereoscopic display apparatus for providing a colour stereoscopic display using three colour components (R, G and B);

Fig. 37 is a timing chart relating to time-divisional synthesis and display of the colour components in the apparatus of Fig. 36;

Fig. 38 is a timing chart relating to positional division and simultaneous synthesis and display of the colour components in the apparatus of Fig. 36;

Fig. 39 is a flowchart showing steps of a hologram forming method;

Fig. 40 is a flowchart showing details of an exposure step in Fig. 39;

Fig. 41 is a perspective diagram of an exposure apparatus used for performing the exposure step of Fig. 40;

Figs. 42A to 42C illustrate multiple exposure of two-dimensional images in a plurality of spatial zones for one segment hologram region of a hologram dry plate;

Fig. 43 is a flowchart showing steps of a method of providing a stereoscopic display in which three-dimensional image data is formed from two-dimensional projection data obtained by photographing an object;

Fig. 44 is a schematic diagram of apparatus for performing the method of Fig. 43;

Fig. 45 is a perspective diagram illustrating arrangements for photographing objects;

Fig. 46 is a flowchart showing details of a two-dimensional image input step of Fig. 43;

Fig. 47 is a flowchart showing details of a three-dimensional data forming step of Fig. 43; and

Fig. 48 is a flowchart of a processing procedure for forming a hologram by producing three-dimensional image data from two-dimensional projection data obtained by photographing an object.

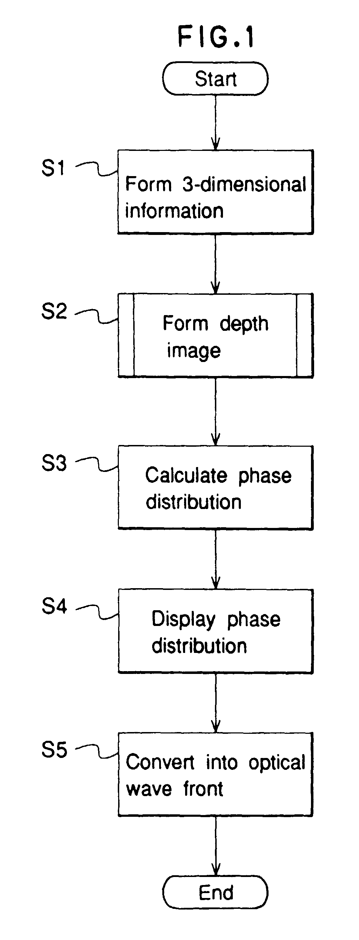

Fig. 1 illustrates a stereoscopic display method in which:

In step S1, three-dimensional coordinate data constituting image information representing a subject consisting of an object or objects to be displayed, is formed from three-dimensional image data by a CAD system, or from two-dimensional data obtained by photographing the objects with a CCD camera or the like.

In step S2, a plurality of depth images are formed by deriving 2-dimensional information from the three-dimensional image information. To produce the depth images, the space containing the objects to be displayed, as seen from a hologram formation surface, is divided up in the depth direction into a plurality of different spatial zones. Depth image data, as projected onto a projection plane set in each zone, each such plane being parallel to the hologram forming surface, is then formed.

In step S3, a phase distribution at the hologram formation surface is calculated from the plurality of depth images.

In step S4, the calculated phase distribution is reproduced physically so as to be expressed at the hologram formation surface. Irradiation of that surface with reproduction light then causes a three-dimensional image to be displayed as a result of optical wavefront conversion according to the expressed phase distribution.

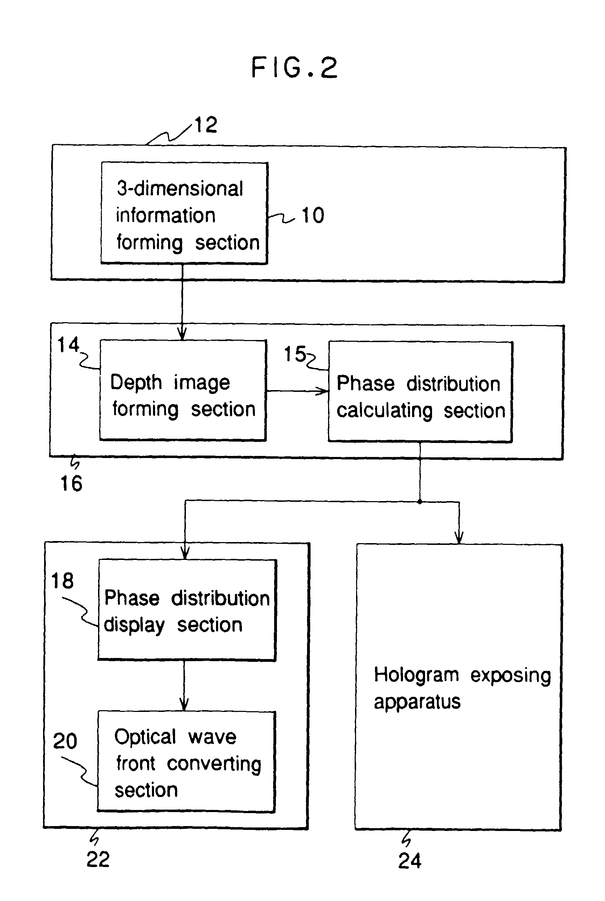

Fig. 2 shows the construction of an apparatus for performing the stereoscopic display method illustrated in Fig. 1. A three-dimensional image information forming section 10 is realized by, for example, a CAD system 12. Three-dimensional image data representing objects to be displayed is formed by the three-dimensional image information forming section 10 and is given to a depth image forming section 14, which derives therefrom a plurality of two-dimensional images located at different positions in the depth direction. The images formed by the depth image forming section 14 are given to a phase distribution calculating section 15, which calculates a corresponding phase distribution at the hologram formation surface. The depth image forming section 14 and the phase distribution calculating section 15 are realized by a computer 16. The results of the calculation performed by the phase distribution calculating section 15 are given to a phase distribution display section 18. A three-dimensional image is displayed by an optical wavefront converting section 20. The phase distribution display section 18 and the optical wavefront converting section 20 form a hologram display apparatus 22. Alternatively a plurality of two-dimensional image data sets, formed by the depth image forming section 14 for respective different positions in the depth direction, are given to a hologram exposing apparatus 24 and are used as a basis for recording holograms on a hologram dry plate, serving as a recording medium, by multiple exposure. A hologram can thus be formed as a fixed record.

Each processing step in Fig. 1 will now be described in more detail.

The formation of three-dimensional image information is now described.

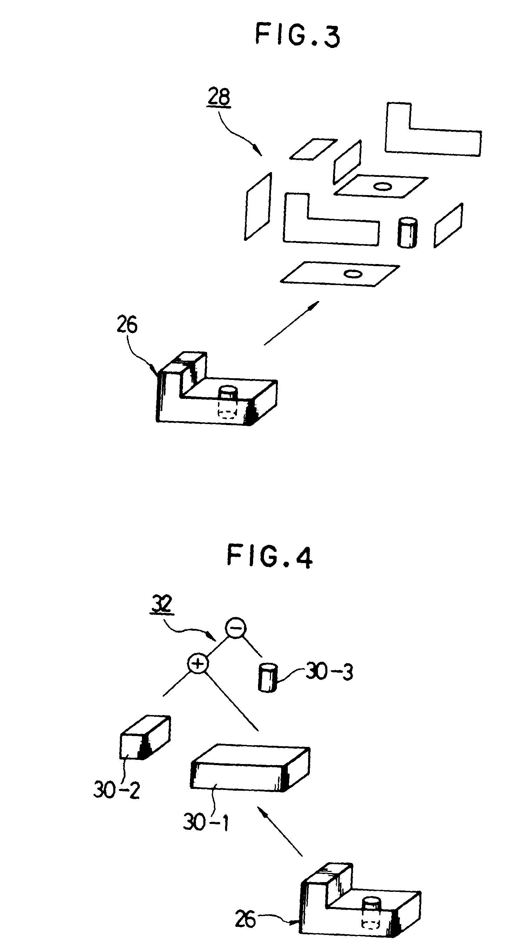

An expressing format of three-dimensional image data in computer graphics can be used in the formation of the three-dimensional image information of an object to be stereoscopically displayed. For example, an object 26 having three-dimensional structure may be separated into a set of planes 28 as shown in Fig. 3. Lists of contours or vertices of the planes are linked, thereby forming three-dimensional image data.

Alternatively, as shown in Fig. 4, the object 26 may be expressed by a set of basic shapes 30-1, 30-2 and 30-3. The object 26 is expressed by using logic arithmetic operating expressions 32 defining the combination of basic shapes 30-1 to 30-3. Such expressing formats of the three-dimensional image data shown in Figs. 3 and 4 are widely used in the field of computer graphics. For example, in the present case, the three-dimensional image data can be produced from CAD data by using a CAD system as shown in Fig. 2.

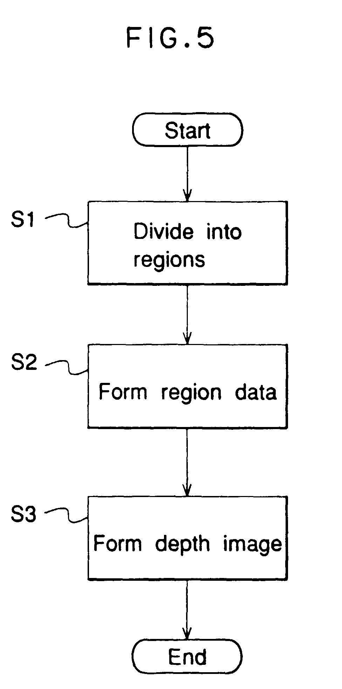

Fig. 5 shows in more detail the Fig. 1 step of forming depth images.

In step S1 of Fig. 5, the three-dimensional image data is divided into sets corresponding to a plurality of different spatial zones (regions) in the depth direction.

In step S2 of Fig. 5, three-dimensional image data is formed for each zone (region).

In step S3 of Fig. 5, two-dimensional depth image data is formed for each zone.

The depth division of the three-dimensional image data will now be explained.

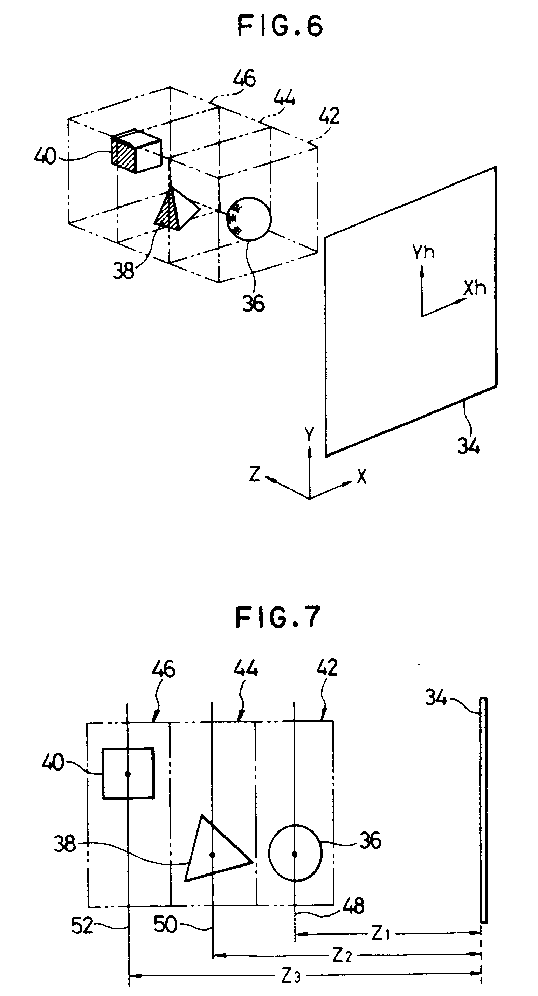

Fig. 6 shows the depthwise division of an object space in which three objects 36, 38 and 40 are arranged, spaced apart from one another in the depth direction, each of these objects having a three-dimensional structure to be displayed.

A hologram formation surface 34 is set at an arbitrary position relative to the objects 36, 38 and 40. Spatial zones 42, 44 and 46 are set, spanning respective different ranges of distance from the surface 34 and respectively containing the objects 36, 38 and 40. These zones are arranged in sequence in the depth direction that is perpendicular to the hologram formation surface 34. A lateral direction of the hologram formation surface 34 is taken as an X axis, a vertical direction as a Y axis, and the depth direction as a Z axis in the object space. A two-dimensional coordinate system of independent two-dimensional coordinates $X_h$ and $Y_h$ is set for the hologram formation surface 34.

Fig. 7 shows a side elevational view of Fig. 6. The object 36 belongs to the zone 42 lying nearest to the hologram formation surface 34. The object 38 belongs to the adjacent zone 44. The object 40 belongs to the zone 46 lying furthest from the hologram formation surface 34. Figures 6 and 7 show a case in which it is possible to allocate separate objects into respective separate, non-overlapping, depth zones. In many cases, however, objects will overlap in the depth direction.

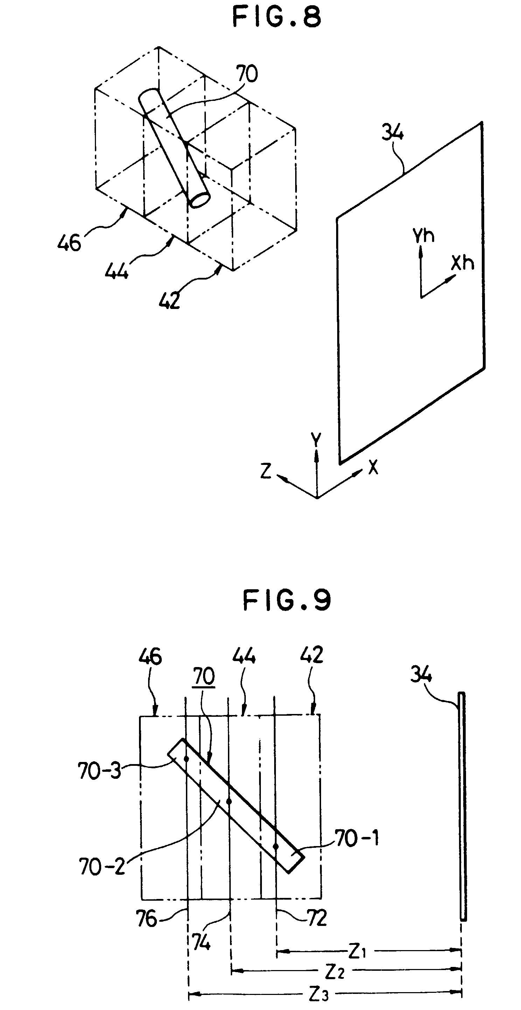

Fig. 8 shows zonal divisions for a single object 70 which is extensive in the depth direction. In this case, the zones 42, 44 and 46 are chosen so as to subdivide the object 70 into three portions in the depth direction.

Fig. 9 shows a side view of the zonal divisions of Fig. 8.

When the zonal divisions can be performed as shown in Figs. 6 to 9, each three-dimensional image data set is produced as a zonal data set which expresses the content of one zone. That is, in Figs. 6 and 7, after completion of the zonal division, independent three-dimensional image data is obtained for each object 36, 38 and 40. In Figs. 8 and 9, after completion of the division, three-dimensional image data sets indicative respectively of three object parts, constituted by the divided cylindrical portions 70-1, 70-2 and 70-3, are obtained.

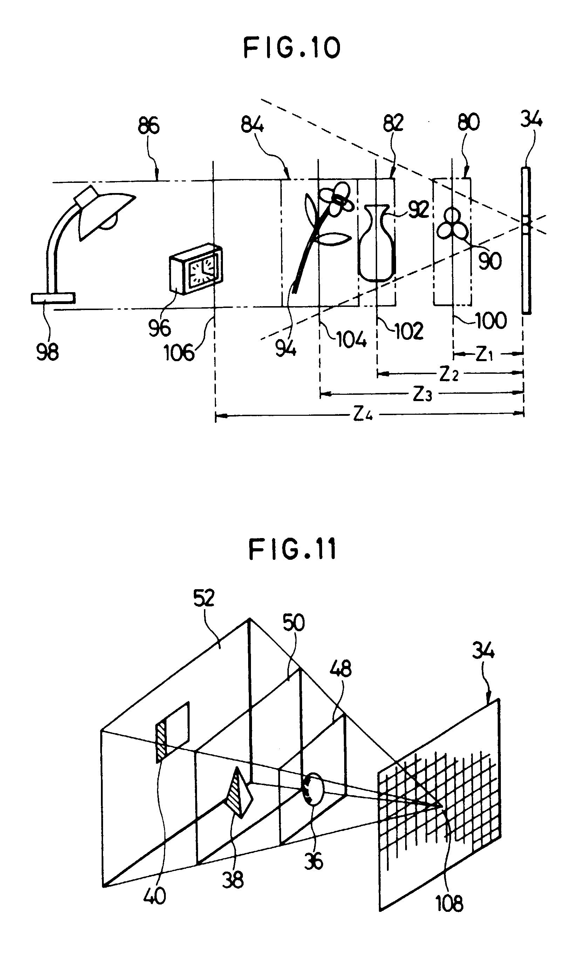

Fig. 10 shows the general depth division of three-dimensional image data. In this example, objects 90, 92, 94, 96 and 98 are arrayed in the depth direction in relation to the hologram formation surface 34. Individual depth zones 80, 82 and 84 are set respectively for the objects 90, 92 and 94. A single background zone 86, furthest from the hologram formation surface 34, extends to infinity so as to contain the objects 96 and 98 spaced at distances greater than or equal to a predetermined distance from the hologram formation surface 34.

The formation of the two-dimensional depth images will now be described.

When three-dimensional image data corresponding to the depth division has been formed, two-dimensional projection data is formed for each zone. In Fig. 7, projection planes 48, 50 and 52 are shown set for use respectively in forming the two-dimensional projection data sets for the three zones. These planes lie parallel to the hologram formation surface 34 and pass through the respective geometrical centres of gravity of the objects 36, 38 and 40. A plurality of two-dimensional image data sets are formed, representing perspective images of the objects 36, 38 and 40, as viewed from a plurality of different viewpoints on the hologram formation surface 34, projected onto their corresponding projection planes 48, 50 and 52, the distances from the planes 48, 50 and 52 to the hologram forming surface 34 having been previously obtained as $Z_1$, $Z_2$ and $Z_3$ respectively.

In the case of Fig. 9 projection planes 72, 74 and 76 are set in a similar manner, these planes lying parallel to the hologram formation surface 34 and passing through the geometrical centres of gravity of the respective cylindrical object portions 70-1, 70-2, and 70-3 in the zones 42, 44, and 46. The distances $Z_1$, $Z_2$ and $Z_3$ in the depth direction are precalculated.

In the zonal division shown in Fig. 10, projection planes 100, 102 and 104 are set in a similar manner with respect to the zones 80, 82 and 84, at the positions of the relevant centres of gravity which are calculated as being at distances $Z_1$, $Z_2$ and $Z_3$ respectively. A projection plane 106 is set for the background zone 86, at a distance $Z_4$ in the depth direction from the hologram formation surface 34. The two-dimensional projection data of all of the objects in the background zone 86 (in this case the objects 96 and 98) is formed in relation to their images as projected onto the plane 106.

Fig. 11 shows the principles of forming the two-dimensional depth images for the Fig. 6 arrangement. First, the hologram formation surface 34 is divided up into small areal segments in a matrix-like manner, thereby forming segment hologram areas 108 as minimum units of a composite hologram to be realized. The size of each of the segment hologram areas 108 is set to about 1 mm or less in each of the vertical and horizontal directions. For the sake of simplicity, the segment hologram areas are shown larger than they would be in practice. Two-dimensional pixel information is formed as two-dimensional image data, related to the planes 48, 50 and 52, for each of the segment hologram areas 108 used in turn as a point from which to view the objects 36, 38 and 40 in the respective zones.

For example, the three-dimensional pixel data representing the object 36 is converted into plane pixel data representing that object as seen, projected onto the plane 48, from the viewpoint of the central segment hologram area 108 of the hologram formation surface 34.

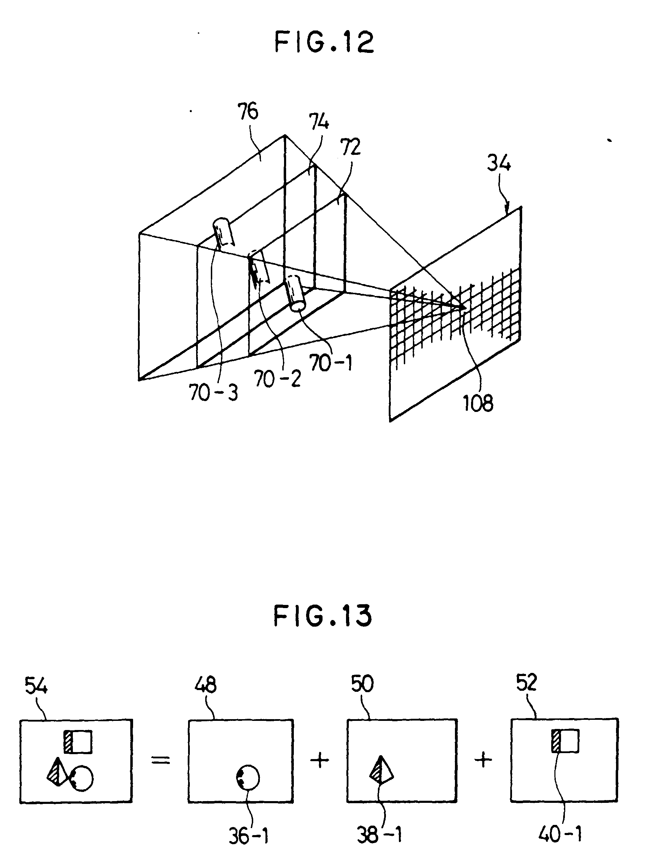

The computation of such two-dimensional images at different depths is executed in a similar manner for the case in which a single object 70 as shown in Fig. 8 is divided up between a plurality of zones (see Fig. 12).

Fig. 13 shows two-dimensional image data 36-1, 38-1 and 40-1 related respectively to the planes 48, 50 and 52 and obtained by setting as a viewpoint the central segment hologram area 108 in Fig. 11. By superimposing those data, a synthesized complete two-dimensional depth image data set 54 can be obtained.

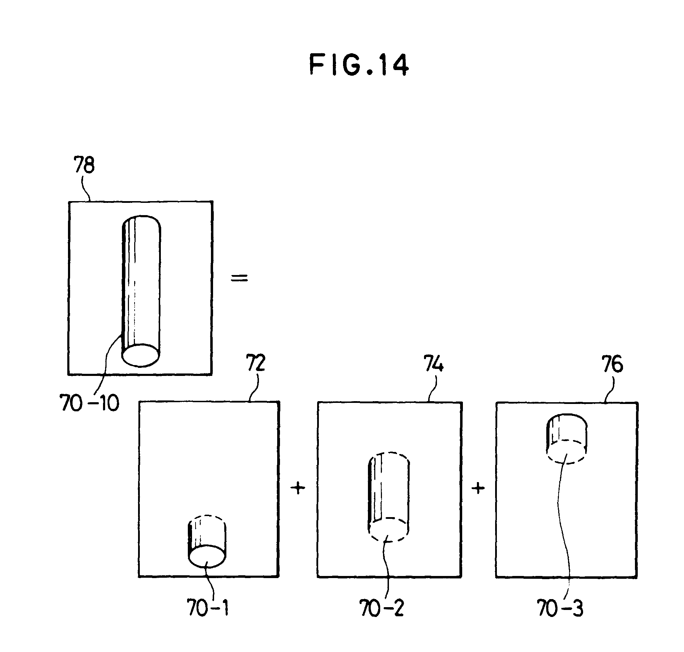

Fig. 14 shows the two-dimensional image data sets 70-1, 70-2 and 70-3 corresponding respectively to the planes 72, 74 and 76 of Fig. 12 when the viewpoint is set to the central segment hologram 108. In this case as well, by superimposing these three two-dimensional image data sets, a synthesized complete two-dimensional depth image 78, in this case two-dimensional image data 70-10 of a continuous cylindrical body, can be obtained.

The method whereby two-dimensional images of an object viewed from a plurality of different directions are formed on the basis of the three-dimensional data as mentioned above can be realized by using the three-dimensional display technique in conventional computer graphics. In this case, processing of hidden lines or hidden areas is also included so that the side surface which is seen is changed in accordance with the direction of observation.

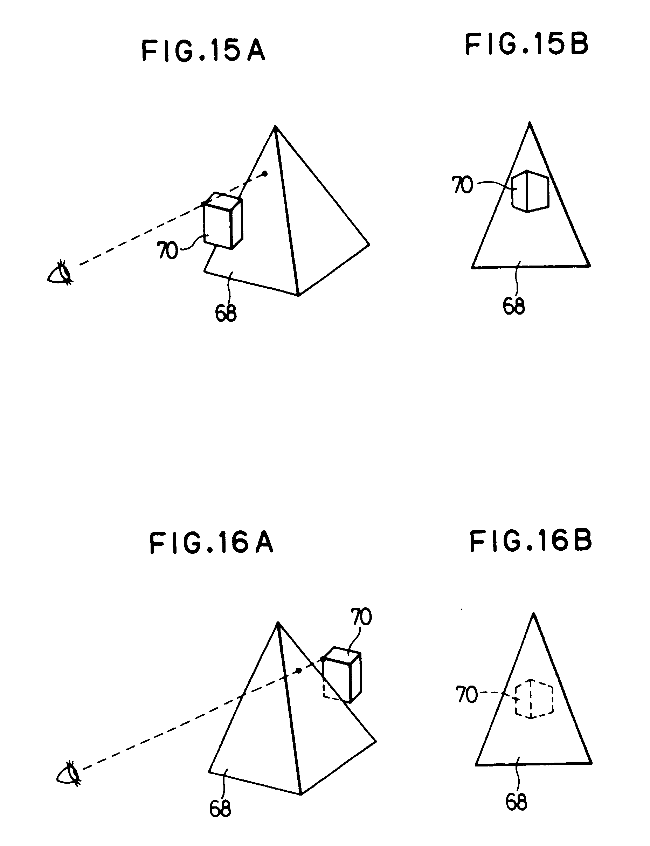

For example, as shown in Fig. 15A, when the object 70 is located in front of an object 68, a 'hidden area' process is executed whereby the part of the plane of the object 68 obscured by the object 70 is not displayed, the resulting image being as shown in Fig. 15B. Likewise, as shown in Fig. 16A, when the object 70 is located behind the object 68, the 'hidden area' process results in the object 70 not being displayed at all since it is fully obscured by the object 68, as indicated schematically in Fig. 16B.

With respect to shadows, when a two-dimensional depth image is formed, since two-dimensional image data is produced by radial projection from an origin constituted by the segment hologram area 108 selected as a viewpoint, different images produced respectively for three different zones appear continuous upon observation, even when a single object is divided among three zones for display at different distances, as shown in Figs. 11 and 12.

When the size, in each of the vertical and horizontal directions, of the segment hologram area 108 is 1 mm or less continuity is retained, even when two-dimensional image data is formed by shifting a viewpoint by an increment of a single segment hologram area 108 and even when the two-dimensional images displayed at different distances in the depth direction are mutually superimposed. The change in direction of observation of an object when viewed from one of the segment hologram areas 108, as compared with the direction when viewed from an adjacent segment hologram area 108, can be in a range from about 0.3 degree to 1 degree. Therefore, instead of moving the viewpoint from one to the next of a plurality of segment hologram areas 108 defined at regular intervals over the hologram formation surface 34, successive viewpoints may be set by changing the direction of observation in each case by a predetermined angle within a range from about 0.3 to 1 degree in both of the horizontal and vertical directions, using the centre of the hologram formation surface 34 as a starting point, and two-dimensional image data for each zone can be calculated for each viewpoint position determined in this way.

Calculation of the phase distribution is now described, the basic principles of hologram formation being explained first.

A single laser beam is divided into two beams, one of which serves as a reference light beam and the other of which is used to irradiate an object. Some of the light of the latter beam is scattered back by the object to provide an object light flux. A hologram can be produced then by combining the reference light beam with the object light flux so that interference occurs between them at a hologram formation surface. If a wavefront of the reference light beam is represented by $R \cdot \exp(j\phi_r)$ and a wavefront of the object light flux is represented by $O \cdot \exp(j\phi_o)$, the exposure intensity IH of the resulting hologram is

$$I_H = R^2 + O^2 + 2 \cdot R \cdot O \cdot \cos(\phi_o - \phi_r) \tag{1}$$

On development of the recorded hologram, changes in amplitudes and phases which are proportional to the exposure intensity $I_H$ of equation (1) contribute to the hologram. To form a hologram electrically, a spatial light modulation device such as a liquid crystal device or the like, which can change the amplitude and phase of light incident thereon, can be used. An image of the object can be reproduced for viewing by irradiating the hologram with a wavefront equivalent to that of the reference light beam. In the exposure intensity $I_H$ of equation (1), only the third term of the right-hand side contributes to the reproduction of the object light. Bearing this in mind, the light T transmitted through the hologram is given by the following equation:

$$T = I_H \cdot R \cdot \exp(j\phi_r)$$

$$\alpha\ 2 \cdot O \cdot \cos(\phi_o - \phi_r) \cdot \exp(\phi_r)$$

$$= O \cdot \exp(j\phi_r) + O \cdot \exp\{-j(\phi_o - 2 \cdot \phi_r)\} \tag{2}$$

The first term on the right-hand side of equation (2) denotes that the wavefront from the object was reproduced. The second term on the right-hand side indicates a conjugate wave of the object light. From the above description, it will be understood that it is sufficient to calculate only the third term of the right-hand side of the equation (1) in the calculation of the phase distribution of a hologram.

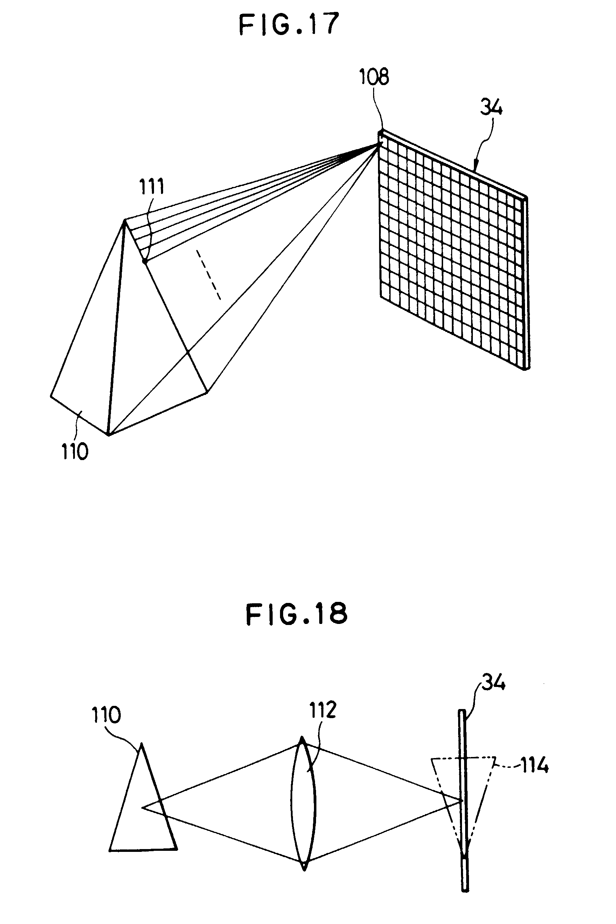

Fig. 17 shows the principles of the formation of a Fresnel-type hologram. If the reference light beam is a plane wave, its intensity is independent of location, so light intensity R can be ignored. Further, for a plane wave incident perpendicularly on the hologram surface, one may treat the phase as being everywhere $\phi_r = 0$. When luminance (scattering degree) at a certain sampling point 111 having coordinates $(X_i, Y_i, Z_i)$ on an object 110 is set to $l_i$, the exposure intensity $l_H$ of the hologram segment 108, being the minimum unit on the hologram forming surface 34, is

$$l_H = \Sigma_i \{(l_i/r_i) \cdot \cos (k \cdot r_i)\} \qquad (3)$$

where k denotes the wave-number of the laser beam, and

$$r_i = \sqrt{\{(X_i - X_{hi})^2 + (Y_i - Y_{hi})^2 + Z_i^2\}} \qquad (4)$$

For a Fresnel-type hologram as shown in Fig. 17 it is necessary to execute the calculations of equations (3) and (4) for the whole region of the hologram formation surface 34, since the light irradiated from the object 110 reaches the whole hologram.

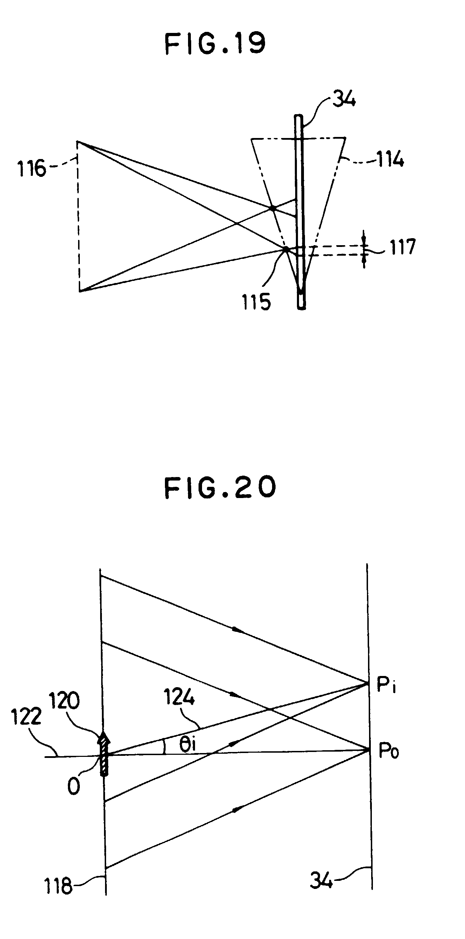

On the other hand, for an image-type hologram as shown in Fig. 18, the image of the object 110 is formed as a real image 114 at the position of the hologram formation surface 34 by an image forming lens 112. Therefore, as shown in Fig. 19, for example, light from a sampling point 115 of the real image 114 reaches only the portion 117 of the hologram formation surface 34, which portion is determined by a virtual opening 116. The region over which equations (3) and (4) need to be calculated is thus limited.

As an example, with respect to the central segment hologram area 108 of the hologram formation surface shown in Fig. 11, each two-dimensional pixel of each of the two-dimensional depth image data sets obtained respectively from the objects 36, 38 and 40 in the three defined zones is taken as a sampling point and the equations (3) and (4) are calculated. Exposure intensities $(l_{Hi})_1$, $(l_{Hi})_2$ and $(l_{Hi})_3$ for the hologram are obtained for the respective zones. The phase distribution of one segment hologram 108 is then calculated as the sum of these exposure intensities obtained for the different zones. This is expressed by the following general equation with respect to zone numbers 1 to n.

$$l_{Hl} = (l_{Hi})_1 + (l_{Hi})_2 + ... + (l_{Hi})_n \qquad (5)$$

The size of a three-dimensional image displayed may be adjusted by the following method.

Fig. 20 shows the hologram formation surface 34 and a two-dimensional depth image display surface (projection plane) 118 which are separated by a predetermined distance. An image 120 is shown projected onto the image display surface 118. The image 120 is shown as an upward arrow. A centre line 122 is shown extending in the Z-axis direction and passing through an origin point O on the image display surface 118 and a point $P_0$ on the hologram formation surface 34. The point $P_0$ corresponds to one segment hologram. A point $P_i$ corresponding to another segment hologram is shown above the point $P_0$. The phase distribution at the point $P_0$ is obtained from all of the sampling points of the image 120 on the basis of the equations (3) and (4). Similarly, the phase distribution at the point $P_i$ can be obtained from all of the sampling points of the image 120. The image 120 appears different when seen from $P_0$ as compared with $P_i$, the difference being due only to parallax. When the two-dimensional images of the depth image display surface 118 are processed for each of the different points $P_0$ and $P_i$ on the hologram formation surface 34, the point $P_i$ is displayed about the origin O, relative to $P_0$, by only an angle $\theta_i$. If the image 120 is to be enlarged (or reduced), it is enlarged (or reduced) on the depth image display surface 118 around the origin O as a centre, and the phases at the points $P_0$ and $P_i$ are calculated on the basis of the result of the enlargement (or reduction).

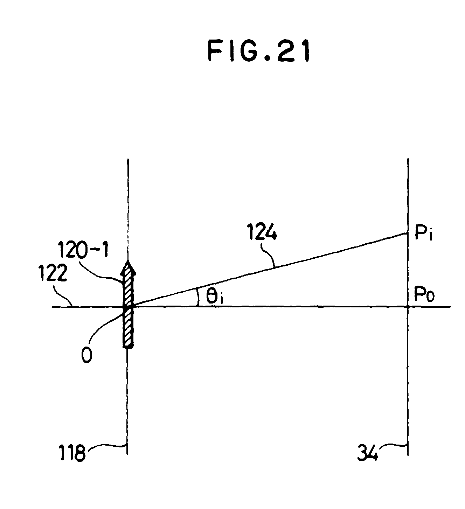

Fig. 21 shows a situation in which the image 120 of Fig. 20 is enlarged by a factor of two to obtain an image 120-1. In this case also, the angle between the lines from the origin O to the points $P_0$ and $P_i$ respectively is $\theta_i$, being unchanged. No contradiction occurs in the continuity of the parallax between the image seen from the point $P_0$ and the image seen from the point $P_i$. It is desirable that the origin O of the image 120 is set to a sharp edge portion on the object such that it can be always seen at the same position even when the viewpoint position is changed on the hologram formation surface 34.

Adjustment of the distance, from the hologram formation surface, at which a three-dimensional image is to be displayed can be achieved by the following method.

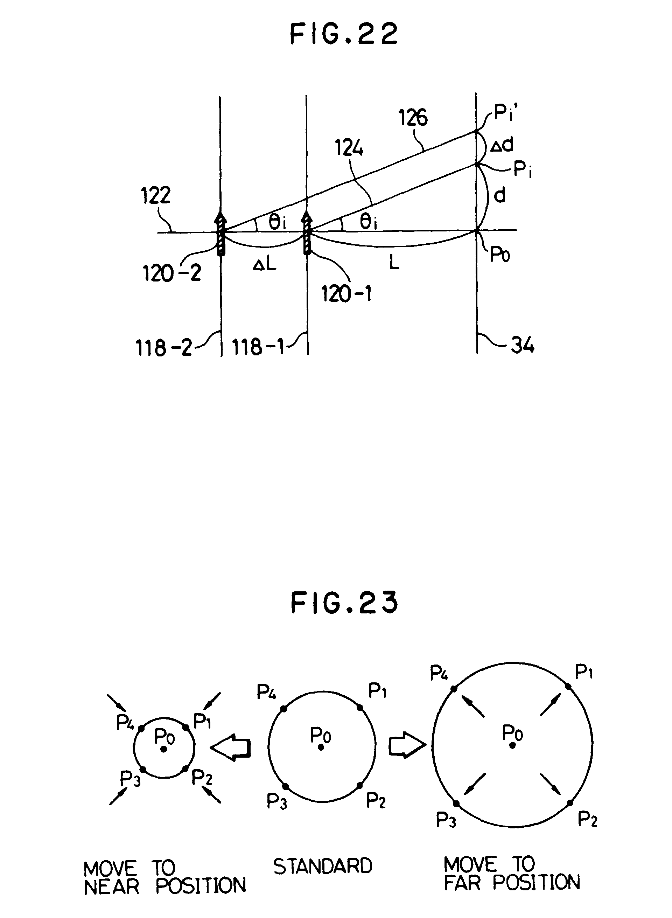

Fig. 22 illustrates a change in the distance of a depth image display surface (projection plane), used to display an image 120-1, from the hologram formation surface 34. First, it is assumed that the image 120-1 on the depth image display surface 118-1, located at a distance L in the depth direction from the hologram formation surface 34, is processed for the different points $P_0$ and $P_i$ on the hologram formation surface 34. In this case, the angular displacement of the point $P_i$ from the point $P_0$, about the centre of the image 120-1, is just an angle $\theta_i$. When the depth image display surface moves from the position 118-1 to a more distant position 118-2, through a depthwise distance of $\Delta_L$, the calculation point $P_i$ for the phase distribution is changed to $P_i'$, so as to maintain the angle $\theta_i$ at the same value. The linear displacement $\Delta_d$ of this calculation point in the phase distribution calculation is in this instance

$$\Delta d = (L/L)d$$

Fig. 23 shows changes of four calculation points $P_1$ to $P_4$ distributed around the central phase distribution calculation point (segment hologram) $P_0$. A case in which the image display surface is moved away from the hologram formation surface 34 is shown at the right-hand side of Figure 23, while the left-hand side shows a case in which the image display surface is moved nearer. When the image display surface is moved nearer, the peripheral calculation points $P_1$ to $P_4$ approach one another more closely. When the image display surface is moved further away, the peripheral calculation points $P_1$ to $P_4$ are displaced radially outwardly and the distances between the calculation points increase. A two-dimensional depth image as seen from a position between the adjacent calculation points can be obtained by image interpolation. The phase distribution relating to the interpolation calculation point is calculated from the interpolation image, thereby maintaining the continuity of the reconstructed three-dimensional image in the case where the display surface was moved further away from the hologram formation surface.

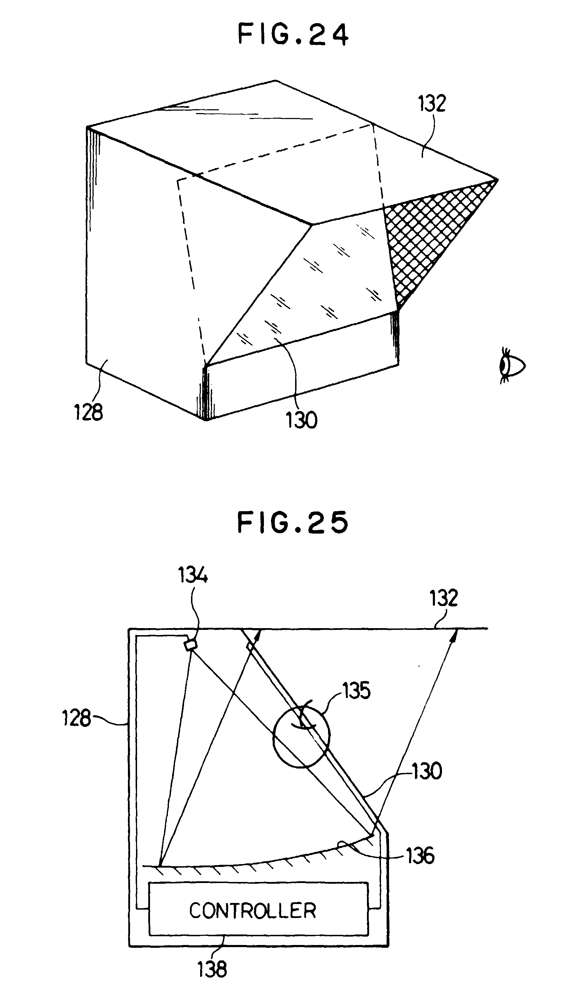

Fig. 24 shows a hologram display apparatus for expressing the calculated phase distribution in physical form, as a composite hologram, and for displaying a three-dimensional image by irradiation of the composite hologram with a reproduction light beam. A spatial light modulation device 130 for electrically forming the composite hologram is provided at the front of an apparatus main body 128. A hood 132 is also provided to shield the zeroth order light transmitted through the device 130.

Fig. 25 shows internal structure of the Fig. 24 apparatus. A laser light source 134, which functions as a point light source, a collimating mirror 136 and a controller 138 are disposed in the main body of the apparatus. The controller 138 gives the calculated phase distribution to the spatial light modulation device 130. A spherical wave originating as a point light source from the laser light source 134 is converted into a parallel reproduction light beam (i.e. collimated) by reflection at the collimating mirror 136 and is directed onto the spatial light modulation device 130, thereby causing a three-dimensional image 135 to be reconstructed. The part of the collimated light beam which passes directly through the spatial light modulation device 130 as a zeroth order component is blocked by the hood 132.

In a preferred embodiment, the laser light source 134 is a small semiconductor laser with a spectral bandwidth of a few nanometres or less, which is capable of reconstructing a clear three-dimensional image. Any wavelength in the visible range can be used. It is, however, necessary to consider the wavelength of the light source, used for reconstruction, when calculating the hologram phase distribution. For example, it is possible to use a semiconductor laser which emits a red light beam whose wavelength is of the order of 600 nm, or one which emits a green light beam whose wavelength is of the order of 500 nm, or one which emits a blue light beam whose wavelength is of the order of 400 nm.

In case of a Fresnel-type hologram with the object 110 positioned away from the hologram formation surface 34 as shown in Fig. 17, as the distance increases, the hologram (phase distribution) becomes more sensitive to the colour distribution over the spectral bandwidth of the reproduction light. In such a case, it is desirable to use a semiconductor laser having a narrow output bandwidth.

On the other hand, in the case of an image type hologram with the image 114 located near the hologram formation surface 34 as shown in Fig. 18, the hologram is relatively insensitive to the colour distribution over the spectral bandwidth of the reproduction light. Therefore, a clear reproduction image can be obtained even when the spectral bandwidth of the source is relatively broad. In this case, it is possible to use a halogen lamp or the like, whose spectral bandwidth is about 10 nm, instead of a laser source.

Although a spherical wave is directly emitted from the laser light source 134 in Fig. 25, it is also possible to construct the apparatus in such a manner that a laser beam is passed through an objective lens and a pin hole, or such that a laser beam is transmitted through an optical fibre to provide light which disperses from an output end of the fibre.

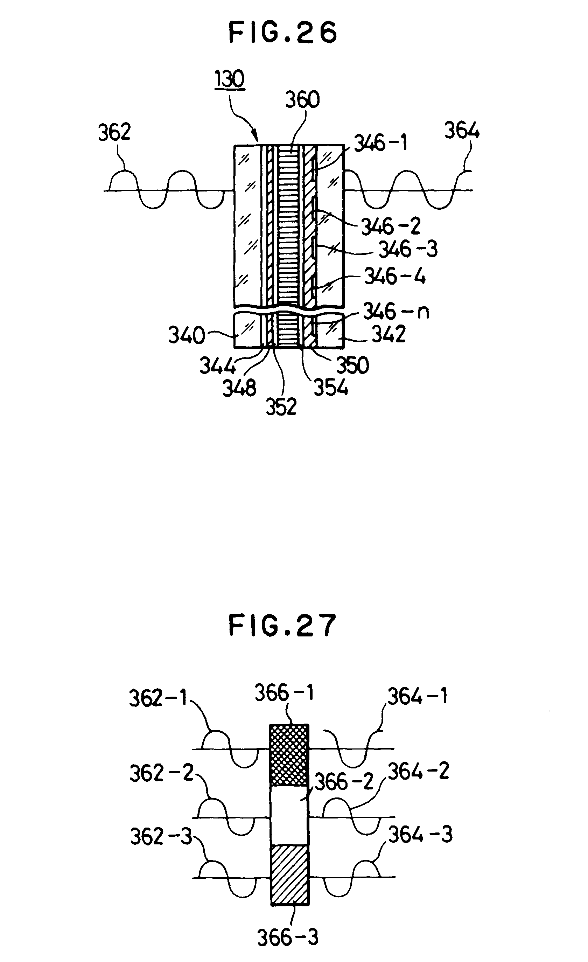

Fig. 26 shows a spatial light modulation device 130, for use in an embodiment of the present invention, in which a liquid crystal display of the transmitting type is used. An input surface is provided by one side of a glass substrate 340, on the other side of which a uniform transparent electrode 344 is disposed. Branched transparent electrodes 346-1 to 346-n form display segments and are arranged on an inner face of a glass substrate 342 at an output side of the device. Liquid crystal orientation films 352 and 354 are provided inwardly of the transparent electrodes 344 and 346-1 to 346-n but separated therefrom respectively by insulating layers 348 and 350. A layer of liquid crystal 360 is disposed between the orientation films 352 and 354, so that the device constitutes a liquid crystal display panel. To drive the liquid crystal display, a voltage corresponding to the appropriate calculated phase information is applied to each liquid crystal cell in a manner determined by signals applied to the electrodes 346-1 to 346-n. The refractive index of the liquid crystal cell for the transmitting direction of a reproduction light beam 362 is thus locally modulated in accordance with the control voltages applied.

Fig. 27 shows details of the phase modulation with respect to three of the pixels of the liquid crystal display as an example. Reproduction light beams 362-1 to 362-3 of the same phase, for example plane waves, enter from the left side into pixels 366-1 to 366-3. These pixels are driven in accordance with respective different phase states (so as to have different refractive indices) so that relative phase deviations exist between the outgoing light beams 364-1 to 364-3 as a result of their different optical path-lengths in the respective liquid crystal pixels 366-1 to 366-3.

Ideally, it is desirable that any phase in a range from 0 to $2\pi$ can be expressed, which range corresponds to an optical distance of a full wavelength. However, even when the phase is expressed discretely, by multivalue levels, the desired phase distribution can be expressed approximately within a practical range. The thickness d of the liquid crystal layer is selected so as to satisfy conditions such that the product An x d, of the thickness d and the maximum refractive index change $\Delta n$ which can be induced by the applied voltage, is equal to one wavelength $\lambda$ of the reproduction light. To accurately express the phase distribution and to obtain a clearly reproduced three-dimensional image, it is necessary to limit the liquid crystal cell size to the order of a wavelength, using a liquid crystal display having a high resolution.

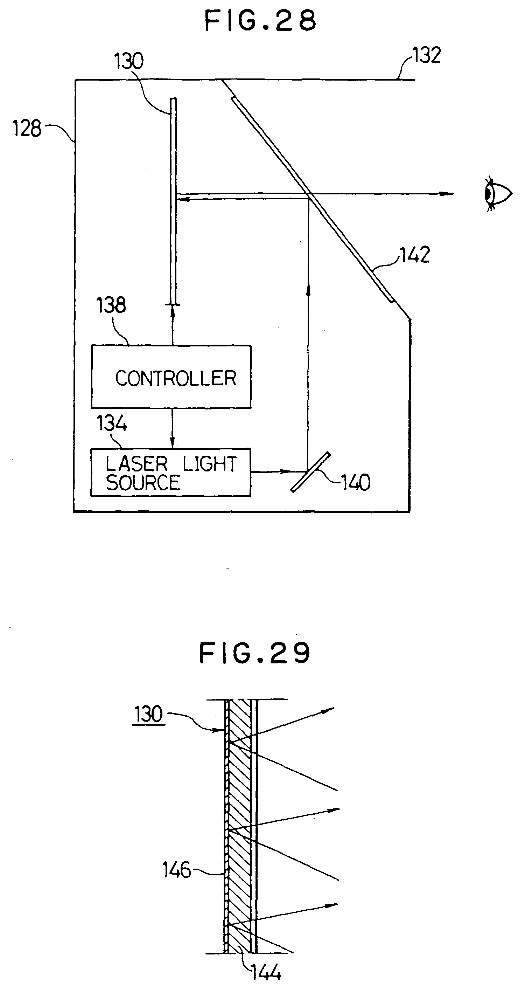

Fig. 28 shows another stereoscopic display apparatus, for use in an embodiment of the invention, in which a reflecting-type spatial light modulation device 130 is used. The device 130 is provided in the main body 128 of the apparatus and electronically expresses (i.e. forms a physical reproduction of) a hologram having the phase distribution calculated by the controller 138. A reproduction light beam from the laser light source 134 is reflected by a mirror 140 and is further reflected by a half mirror 142 so as to enter the reflecting type spatial light modulation device 130. Modulated light from the modulation device 130 passes through the half mirror 142, thereby displaying a three-dimensional image.

As shown in Fig. 29, in the reflection-type modulation device 130 the reproduction light first enters a reflection-type liquid crystal display 144 at one side of the device, is reflected by a reflecting surface 146 at the opposite side, traverses the display 144 once more, and is then emitted from the device. Since reproduction light passes through the liquid crystal display twice in such a reflection-type modulation device (as compared with only once in a transmission-type liquid crystal modulation device) the thickness of the liquid crystal layer needed to obtain a given phase change can be reduced by one half. It should be noted that in this embodiment a liquid crystal of the homogeneous orientation type is used so that its polarization is preserved.

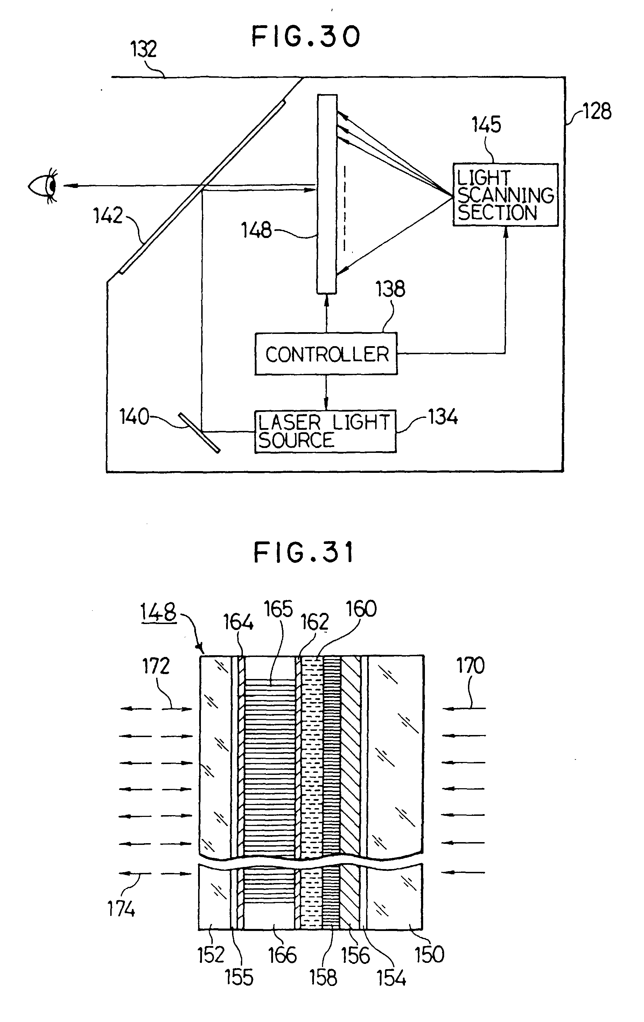

Fig. 30 shows another embodiment of a stereoscopic display apparatus. In this embodiment the information of the calculated phase distribution is optically written and reproduced. A spatial light modulation device 148, in which phase distribution information can be written optically by a laser beam from a light scanning section 145, is provided in the main body 128 of the apparatus. When phase distribution information is written into the spatial light modulation device 148 by the laser beam from the light scanning section 145, the controller 138 controls the modulation device 148 so that it provides the same conditions as in the reflection-type device 130 shown in Fig. 29. Thus, the laser beam from the laser light source 134 is reflected by the mirror 140 and the half mirror 142 and is incident on the left side of the spatial light modulation device 148 as a reproduction light beam. The image is then displayed via projection through the half mirror 142 to the observer.

Fig. 31 shows internal structure of the optically writable spatial light modulation device 148 of Fig. 30. A transparent electrode 154, a photoconductive layer 156 and a light shielding layer 158 are arranged on one side of a glass substrate 150, the other side of which receives a writing light beam 170. A dielectric mirror 160 is provided inwardly of the light shielding layer 158. A glass substrate 152 is provided, on the side of the device which is opposite to that of the substrate 150, for receiving and re-emitting a reproduction light beam 172. A transparent electrode 155 is provided on the substrate 150. A liquid crystal layer 165 is arranged between insulating films 164 and 162 provided respectively on the transparent electrode 155 and the dielectric mirror 160.

During operation of the spatial light modulation device 148 of Fig. 31, when the writing light beam 170 is first incident on the photoconductive layer 156, the resistance value of that layer drops where the light intensity is large. Since the resistance value of the photoconductive layer 156 changes, while the driving voltage is kept constant, the voltage which is applied across the corresponding part of the liquid crystal panel 165 through the dielectric mirror 160 changes locally by an amount corresponding to the resistance value change. When the voltage which is applied across part of the liquid crystal changes, as mentioned above, the refractive index changes locally. When the incident reproduction light beam 172 is reflected by the dielectric mirror 160 and is returned, the reproduction light becomes a modulation light beam 174 carrying phase modulation information.

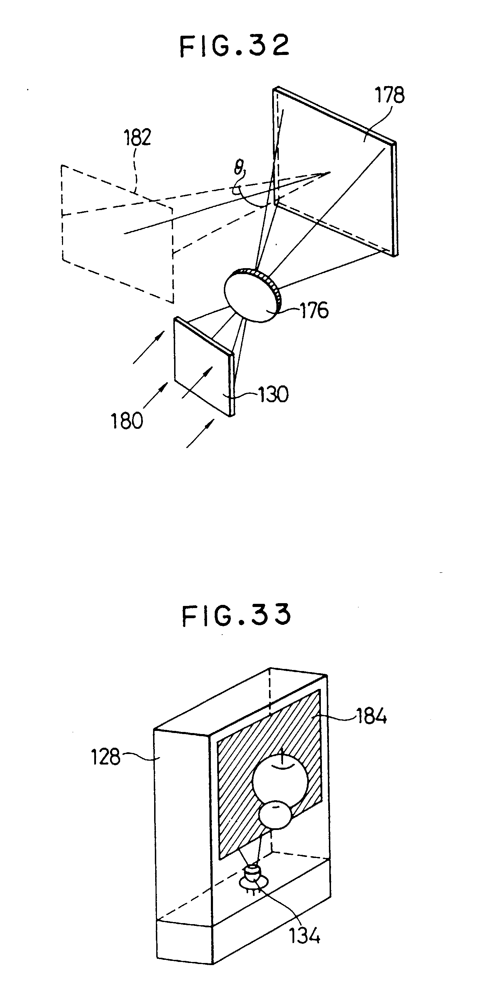

Fig. 32 shows another stereoscopic display apparatus for use in an embodiment of the invention. In this embodiment, a reproduction light beam 180 enters the spatial light modulation device 130, which uses a transmission-type liquid crystal display or the like to express the calculated phase distribution, and is modulated thereby. The modulated light beam from the spatial light modulation device 130 is enlarged by a projection optical system 176 and is projected onto a hologram screen 178, thereby enabling a three-dimensional image to be observed over the visual field 182 corresponding to an angular visibility range θ.

Fig. 33 shows another embodiment of a stereoscopic display apparatus. In this embodiment a hood for preventing the zeroth order light component being displayed can be dispensed with. A refracting body for suppressing the emission of the zeroth order light is integrated with the spatial light modulation device 184 in the apparatus main body 128.

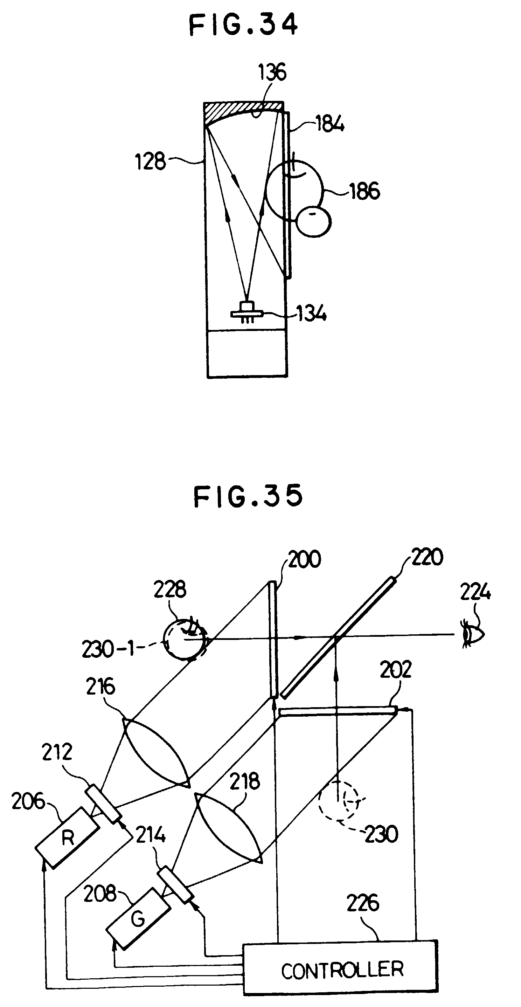

As shown in Fig. 34, in the stereoscopic display apparatus of Fig. 33 a spherical wave from the laser light source 134 is reflected by the collimating mirror 136 and directed onto the spatial light modulation device 184, integrated with the refracting body, at an angle of incidence equal to or larger than the critical angle for the refracting body. The zeroth order light is therefore totally internally reflected, thereby preventing zeroth order light from being emitted. A hood to block out the zeroth order light is therefore not required.

To display colour images, it is sufficient that the formation of the three-dimensional image information in step S1 of Fig. 1, the formation of the depth image in step S2, and the calculation of the phase distribution in step S3, are executed for each spectral component, for example, for R, G and B components.

Fig. 35 shows an embodiment of a colour stereoscopic display apparatus for producing a two-colour display, the apparatus comprising two of the stereoscopic display apparatuses described above. A spatial light modulation device 200 is driven in accordance with the phase distribution calculated with respect to, for example, the R component by a controller 226. A spatial light modulation device 202 is driven in accordance with the phase distribution calculated with respect to, for example, the G component. Respective reproduction light beams from laser light sources 206 and 208 irradiate the spatial light modulation devices 200 and 202 through shutters 212 and 214 and collimating lenses 216 and 218 respectively, thereby displaying a three-dimensional R component image 228 and a three-dimensional G component image 230. The G component image 230 is reflected by a half mirror 220 and is seen by the eyes 224 of the observer. At the same time, the R component image 228 passes through the half mirror 220 and enters the eyes 224. Consequently, the observer can see a synthetic colour three-dimensional image in which the G component image 230 is superimposed on the R component image 228.

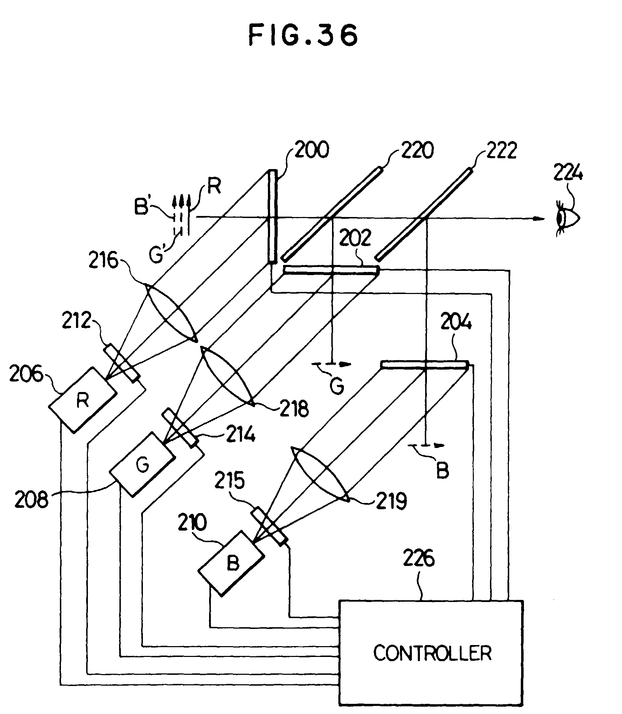

Fig. 36 shows another colour stereoscopic display apparatus for use in an embodiment of the invention. In this embodiment the phase distribution is calculated for each of the R, G and B components to enable a synthesized colour image to be displayed. Three stereoscopic display apparatuses are used. Thus, in addition to the two display apparatuses used in the embodiment of Fig. 35, a laser light source 210, a shutter 215 and a collimating lens 219 are provided to act as a display system for the B component. An additional spatial light modulation device 204, driven in accordance with the phase distribution calculated with respect to the B component, is also provided. Further, a half mirror 222 is added for combining the B component image from the spatial light modulation device 204 with the R and G component images. A synthesized three-dimensional colour image, formed from the R, G and B components shown by arrows, can thus be observed by the eyes 224 of the observer.

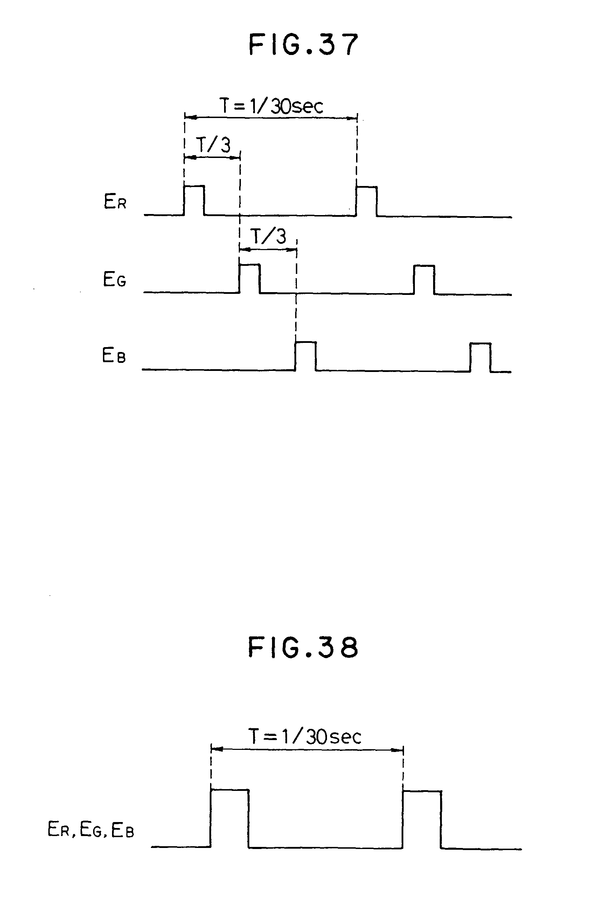

Fig. 37 shows a timing chart of driving signals $E_R$, $E_G$ and $E_B$ for time-divisionally displaying the RGB components by opening or closing the shutters 212, 214, and 215, this being controlled by the controller 226 illustrated in Fig. 36. The driving signals $E_R$, $E_G$ and $E_B$ are generated so as to be repeated at intervals T of 1/30 second and so have relative timing delays of T/3. In the case of the embodiment of Fig. 35, with only the components R and G, the timing deviation between the two signals $E_R$ and $E_G$ can be set to T/2.

Fig. 38 shows a timing chart of another driving method suitable for use with the embodiments of Figs. 35 and 36. In this case, the shutters are opened in unison at intervals of T = 1/30 second and three-dimensional images of two or three colour components are simultaneously displayed at the appropriate positions, thereby synthesizing the required colour image.

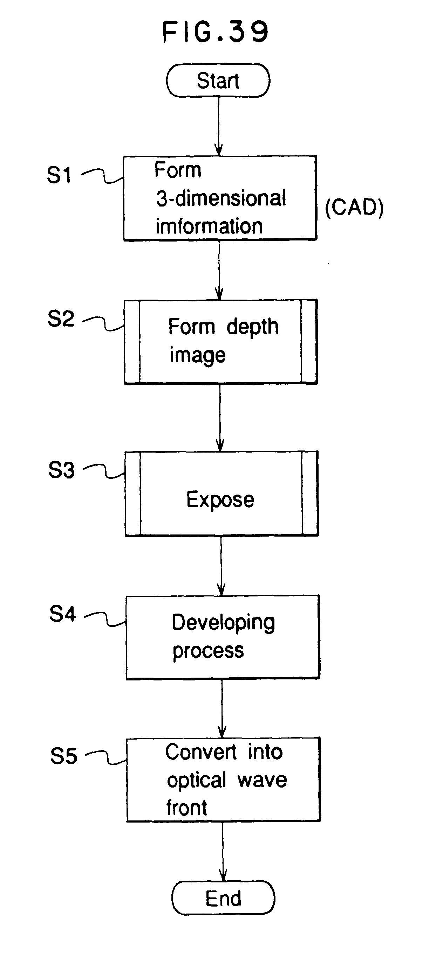

A method of forming a hologram by exposure is now described with reference to Figs. 39 to 42.

Fig. 39 shows a method of manufacturing a hologram on a hologram dry plate or the like. In this method, steps S1 and S2 are fundamentally the same as those of the method of Fig. 1, but subsequent steps differ therefrom.

Instead of calculating the phase distribution, as in step S3 of the method of Fig. 1, in step S3 of the present method, the two-dimensional image data of the perspective projections of each object present in a given zone, as viewed from respective different viewpoints corresponding to respective segment hologram areas and projected onto the projection plane defined for the zone concerned, are directly used to generate an interference pattern to which a hologram dry plate or the like is exposed. The two-dimensional image data of each perspective projection is loaded in turn on a liquid crystal display or the like. Exposure is accomplished by interference between two light beams, one produced by irradiating the liquid crystal display with an illumination light beam and the second being a reference light beam which is arranged to interfere with the illumination light beam subsequent to the latter's modulation by the two-dimensional image data forming the perspective projection then loaded on the liquid crystal display.

After completion of the exposure, a developing process is executed in step S4.

A dry plate hologram dry plate resulting from this process can be placed into a display apparatus and irradiated with a reproduction light beam so that the beam becomes modulated, thereby generating a wavefront determined by the phase distribution recorded on the hologram and serving to display the corresponding stereoscopic image (step S5).

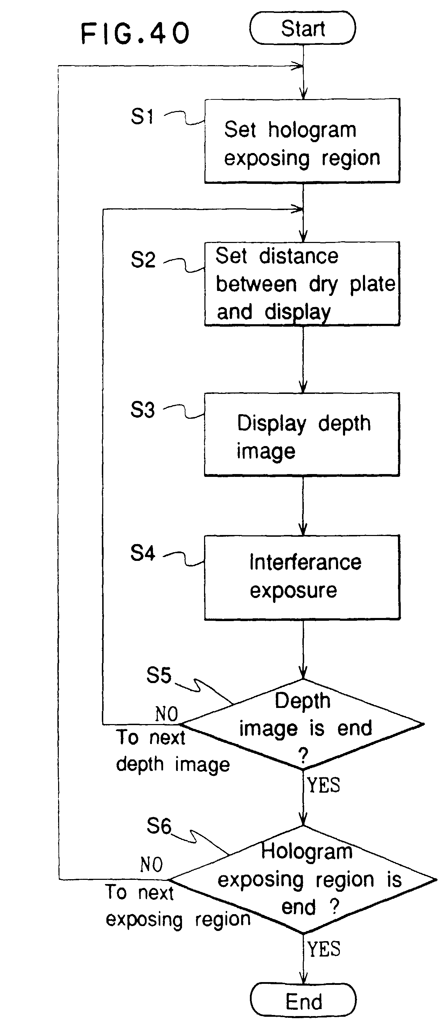

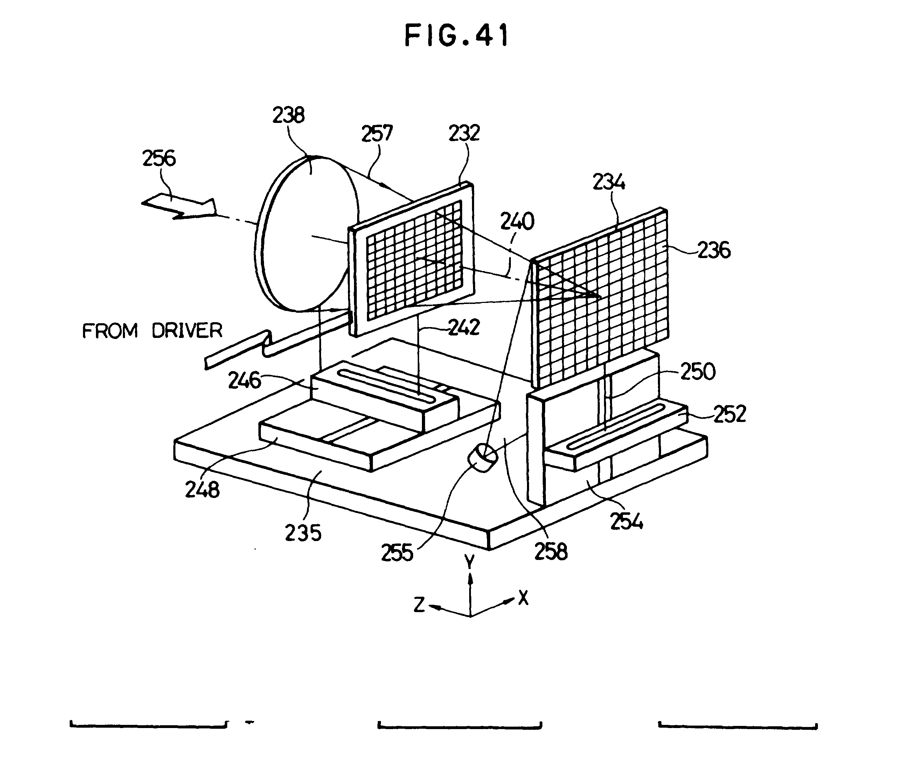

Fig. 40 shows in more detail the exposure process shown in step S3 of Fig. 39, which step can, for example, be performed using an exposure apparatus as shown in Fig. 41. The exposure apparatus shown in Fig. 41 is first described before giving a full explanation of the exposure process depicted in Fig. 40.

Fig. 41 shows an exposure apparatus comprising an image forming lens 238, a liquid crystal display 232 and a hologram dry plate 234. The liquid crystal display 232 is supported by a supporting arm 242 and can be moved in the Z and X directions by a Z-stage 246 and an X-stage 248 respectively, these being mounted on a base plate 235. The hologram dry plate 234 is supported by an arm 250 and can be moved in the X and Y directions by a further X-stage 252 and a Y-stage 254 as shown in Fig. 41. An image forming lens 238 is provided to converge the illumination light beam 256 so that, after passing through the liquid crystal display 232, it is focussed onto one of a multiplicity of micro segment hologram regions 236 on the hologram dry plate 234.

The exposure process according to the flowchart of Fig. 40 will now be described with reference to the apparatus of Fig. 41.

In step S1, one of the segment hologram regions 236 that are arrayed in matrix form over the hologram dry plate 234 is selected for exposure by aligning it with the optical axis 240 of the image forming lens 238.

In step S2, the distance in the Z direction between the liquid crystal display 232 and the hologram dry plate 234 is set to a distance $Z_1$ corresponding to the position of the projection plane of the zone to be first processed.

In step S3, the two-dimensional perspective image corresponding to the selected zone and the selected segment hologram region, which image is to be recorded in holographic form onto the selected micro segment hologram region 236, is loaded onto the liquid crystal display 232 and displayed. The illumination light 256, which has propagated through the image forming lens 238 and been converged thereby to form a light beam 257, passes through the liquid crystal display 232 on which the appropriate two-dimensional image is loaded and is modulated thereby. The thus modulated beam 257 then converges onto the selected segment hologram region 236 where it interferes with a coherent reference light beam 258 which divergently illuminates the hologram dry plate via a beam expander 255.

Thus, in step S4, the selected segment hologram region 236 is exposed so as to produce a hologram formed from the interference between the illuminating light 256, which has passed through the appropriately loaded liquid crystal display 232, and the reference light 258.

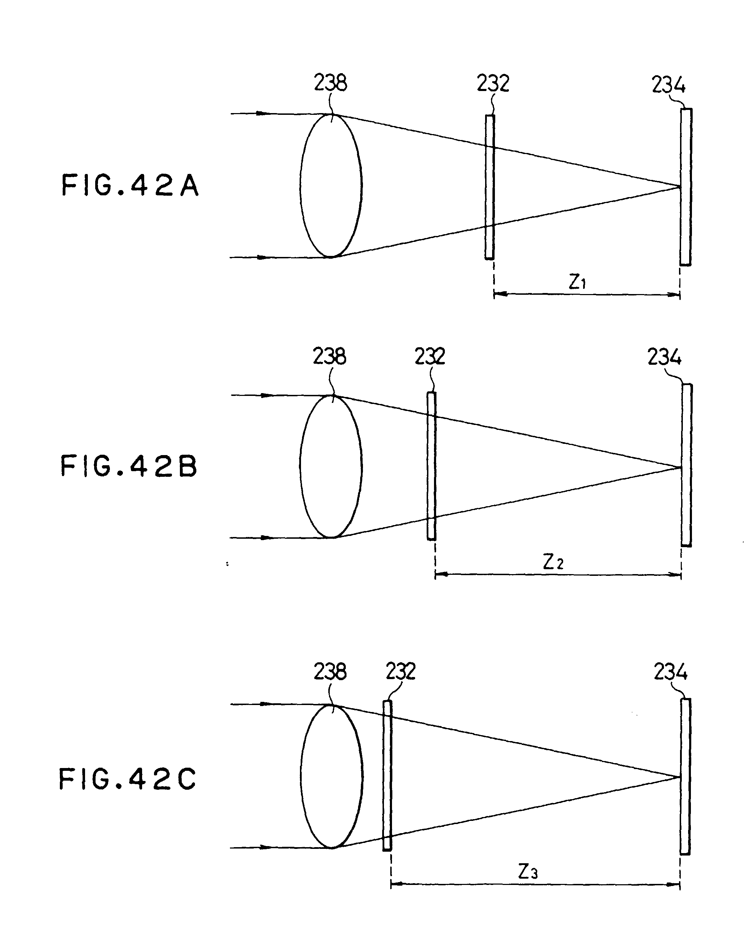

In step S5, a check is made to establish whether there are further zones for which respective depth images are to be processed for the currently selected segment hologram region 236. If there are, then the process is returned to step S2, with the distance between the liquid crystal display 232 and the hologram dry plate 234 being set to a value $Z_n$ corresponding to the position of the projection plane of the next zone to be processed. If there are not, then the exposure of the currently selected segment hologram region 236 is complete and step S6 follows. For example, if there are three zones in the depth direction, as shown in Figs. 42A, 42B and 42C, the images corresponding to the zones are displayed in turn with respective distances $Z_1$, $Z_2$ and $Z_3$ between the liquid crystal display 232 and the hologram dry plate 234, thereby executing three successive interference exposures which are mutually superimposed at the selected hologram region 236.

In step S6 it is established whether all the necessary segment hologram regions 236 have been exposed. If YES the process is complete. If NO then the process is returned to step S1 and a further one of the segment hologram regions is selected for exposure by aligning it with the optical axis 240 of the image forming lens 238. Subsequent steps S2, S3... are repeated until the exposures of all the required regions are finished.

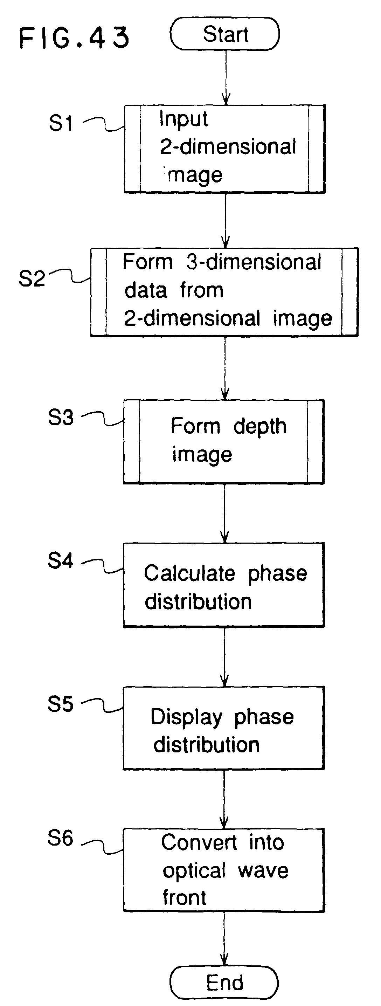

A method of forming the three-dimensional image data from photographing objects using a camera is now described with reference to Figs. 43 to 47.

Fig. 43 shows the steps of this method.

In step S1, two-dimensional image data obtained by photographing an object with a CCD camera or the like are input.

In step S2, this two-dimensional image data is used to form the required three-dimensional image data.

Subsequent steps S3 to S6 correspond to steps S2 to S5 respectively of the method of Fig. 2 described above.

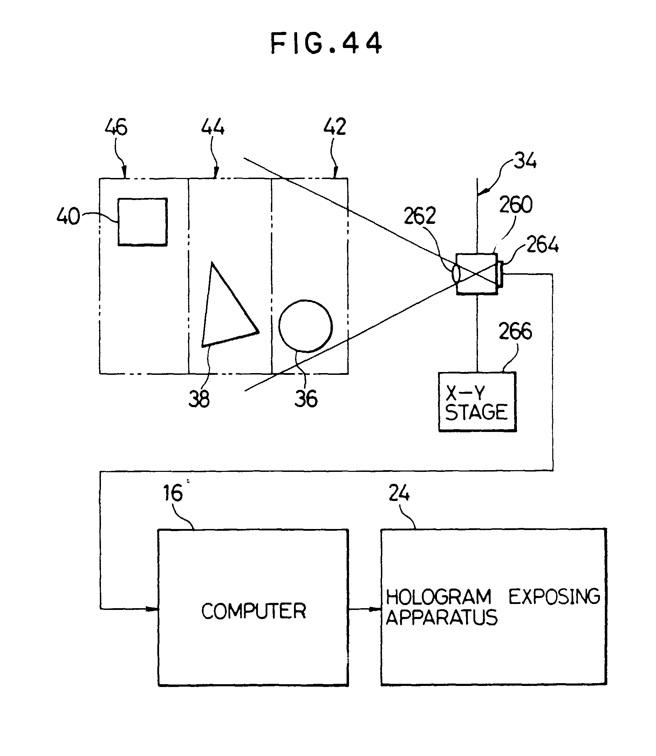

Fig. 44 is illustrative of step S1 of Fig. 43. A CCD camera 260 driven by, for example, a television system is installed at a position corresponding to that of the hologram formation surface 34. The CCD camera 260 has an image forming lens 262 and an image forming surface 264. The CCD camera can be moved in the plane of the hologram forming surface 34 by an XY-stage 266. Objects 36, 38 and 40 positioned at different distances from the hologram formation surface 34 are photographed by the CCD camera 260 and the thus obtained two-dimensional images are supplied to a computer 16.

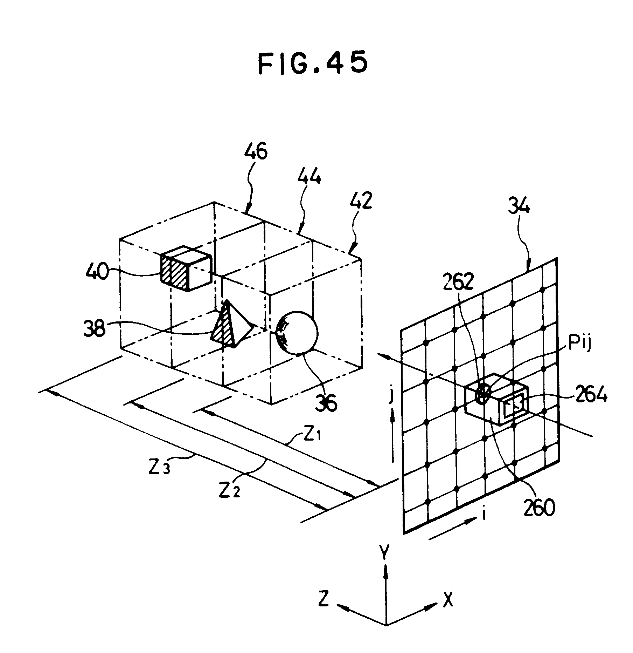

Fig. 45 is further illustrative of how the two-dimensional images are obtained. Objects 36, 38 and 40, each having a three-dimensional structure, are photographed from a series of positions $P_{ij}$ ($i = 1, 2, ....n$; $j = 1, 2....n$) these positions corresponding to a plurality of photographing points set on the hologram formation surface 34. The resulting images comprise the image information input to the process. To obtain photographs from each of the photographing points $P_{ij}$;

a separate CCD camera 260 can be installed at each photographing point position, or a single CCD camera 260 can be used which is moved to each such position in turn. For each photograph, the centre of the image forming lens 262 is aligned with the relevant photographing point $P_{ij}$ (image input position). The optical axis of the image forming lens 262 is set so that it extends in the same direction at each of the photographing points $P_{ij}$. Alternatively, the optical axis of the image forming lens 262 can be set to remain directed to a preselected object point for all the photographing positions. The interval between adjacent photographing points $P_{ij}$ is set so that a continuously changing view of the surface of the imaged object is seen when the reconstructed image is viewed by an observer from a succession of different viewpoints, this condition being familiar from conventional holographic stereogram generation. It is sufficient to set such an interval so as to provide an angular separation of about 0.3 to 1 degree between successive viewpoints. To provide a natural stereoscopic impression when the hologram is to be observed from a succession of different viewpoints, at least some hundreds of photographing points $P_{ij}$ are necessary in the horizontal direction and at least some tens of such points in the vertical direction.

In the case where it is difficult to arrange or move the camera or cameras to all of the desired photographing points, two-dimensional images are photographed from only some of the photographing points, skipping intermediate points. Missing two-dimensional images, corresponding to the skipped points, are then generated by computational interpolation performed on the basis of three-dimensional image data computed from the two-dimensional image data sets obtained directly from the photographs.

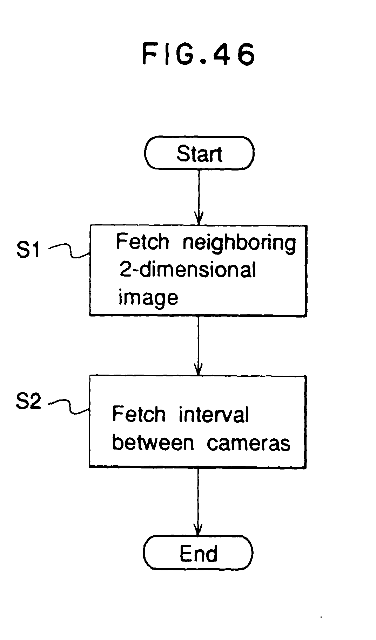

Fig. 46 shows details of the two-dimensional image inputting process shown in Fig. 45.

In step S1, the two-dimensional image data are obtained by photographing adjacent two-dimensional images.

In step S2, the photograph camera interval is fetched. The processes in steps S1 and S2 are repeated.

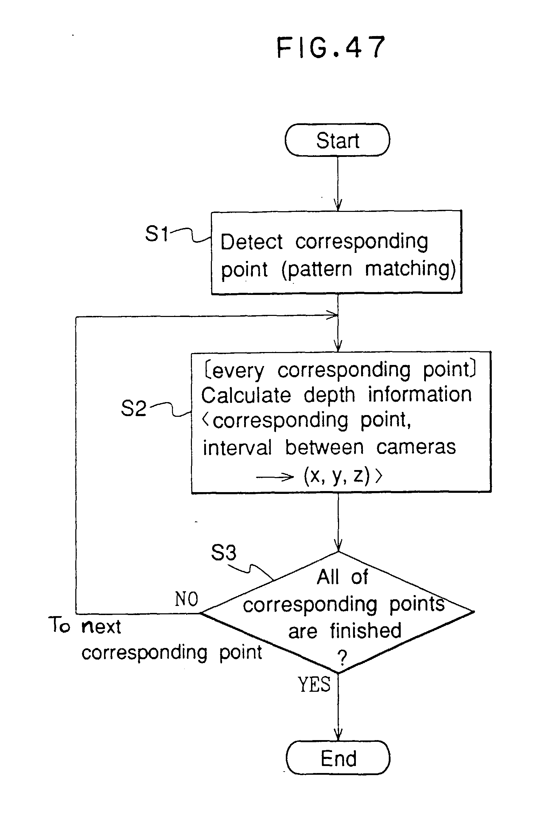

Fig. 47 shows details of step S2 of Fig. 43 - a process of forming three-dimensional image data from extracted two-dimensional image data. In order to form three-dimensional image data in this case, respective corresponding points are detected from the two-dimensional image data by pattern matching of the image data obtained for two points. Depth information is calculated by using the principle of triangulation for the corresponding points, thereby producing the required three-dimensional data (X, Y, Z) of the corresponding points. Step S3 of Fig. 47 ensures that the process in step S2 is executed with respect to all of the corresponding points. In the detection of the corresponding points in step S1 of Fig. 47, in addition to a method equivalent to observation by two eyes, using the two-dimensional images obtained by photographing from two points, precision can be further improved by using a method equivalent to observation by three eyes, using the two-dimensional images obtained by photographing from three points. On the other hand, as a method of directly obtaining depth information without detecting corresponding points, for example, it can be sufficient to measure distances by a rangefinder using a laser beam. The processes after the three-dimensional image data is formed from the two-dimensional image information photographed by the camera are substantially the same as those in the embodiment of Fig. 1 using the three-dimensional data of the CAD system.

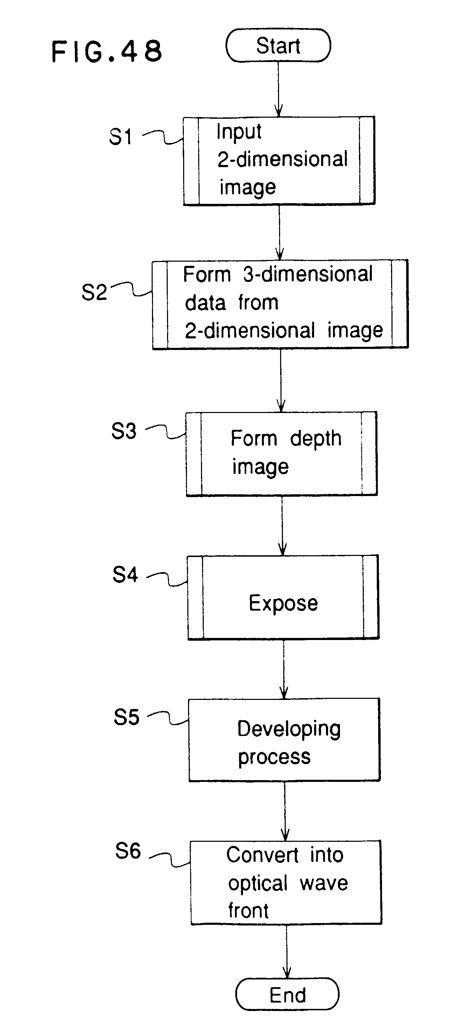

Fig. 48 shows a hologram forming and image reconstruction method similar to that of Fig. 39 but with the three-dimensional image data formation being accomplished according to step S2 of Fig. 43 as just described.

## Claims

1.  A method of producing a composite hologram for use in displaying a stereoscopic image of a three-dimensional subject (36, 38, 40) located in an object space extending away from a hologram formation surface (34), the method comprising:

    a) obtaining three-dimensional coordinate data representing the said subject;

    b) defining a series of different spatial zones (42, 44, 46) in the said object space, which zones span respective different ranges of distance from the hologram formation surface and contain respective different constituent parts (36, 38, 40) of the said subject;

    c) deriving, from the said three-dimensional coordinate data, individual three-dimensional coordinate data sets representing respectively the said different constituent parts;

    d) defining for each of the said zones (42, 44, 46) an individual projection plane (48, 50, 52);

    e) employing the individual three-dimensional coordinate data sets to compute, for each in turn of a multiplicity of preselected different viewpoints (Pi) arrayed over the said hologram formation surface (34), individual depth image data sets representing respective two-dimensional perspective images of the said different constituent parts, each as projected from the viewpoint concerned onto the individual projection plane defined for the zone containing the constituent part concerned; and

    f) employing the said depth image data sets in a process of forming a composite hologram made up of a multiplicity of different areal segments containing respective physical reproductions of individual segment holograms, each of which represents a two-dimensional image that is a combination of all the said perspective images pertaining to an individual one of the said different viewpoints (Pi), which reproductions are arrayed similarly to their respective corresponding viewpoints so that the composite hologram can be irradiated with a reproduction light beam to generate the desired stereoscopic image.

2. A method according to claim 1, wherein at least two of the said different constituent parts (70-1, 70-2) are respective different portions of a single object (70).

3. A method according to claim 1 or 2, wherein at least one of the said different constituent parts comprises a plurality of separate objects (96,98).

4. A method as claimed in claim 1, wherein the said spatial zones are defined so that they contain respective separate objects that together constitute the said subject.

5. A method according to claim 1, 2, 3 or 4, wherein that one of the said spatial zones which is the furthest from the hologram formation surface is a background zone (86) that extends to infinity.

6. A method according to any preceding claim, wherein the projection plane (48, 50, 52) for each zone (42, 44, 46) is defined so that it contains the centre of gravity of the constituent part (36, 38, 40) located in the zone concerned.

7. A method according to any preceding claim, wherein the said individual segment holograms are phase holograms.

8. A method according to claim 7, wherein the composite hologram is formed on light modulating means for spatially modulating the amplitude of such a reproduction light beam in accordance with the phase distribution of each individual segment hologram.

9. A method according to any preceding claim, wherein the said three-dimensional coordinate data representing the said subject is computed from two-dimensional image information obtained by photographing the subject.

10. A method according to claim 9, wherein the said three-dimensional coordinate data representing the said subject is obtained by photographing the subject from a multiplicity of different photographing positions (Pij) arrayed over the said hologram formation surface (34).

11. A method according to claim 10, wherein two-dimensional image information relating to the subject as viewed from a location between two of the said photographing positions is obtained, by computational interpolation, from the two-dimensional image information obtained by photographing the subject from the said two photographing positions.

12. A method according to claim 10 or 11, wherein the photographing is performed by a camera device (260) which is moved to each of the different photographing positions in turn.

13. A method according to claim 10 or 11, wherein the photographing is performed by individual camera devices arranged respectively at the different photographing positions.

14. A method according to claim 12 or 13, wherein the photographing is performed in the same direction at each of the different photographing positions.

15. A method according to claim 12 or 13, wherein the photographing of the constituent part of the said subject in each of the said zones is performed, at each of the different photographing positions, in a direction towards a predetermined point, in the said object space, that is the same for each of the different photographing positions.

16. A method according to any preceding claim, wherein the computation of the said depth image data sets involves effective enlargement of the said perspective images.

17. A method according to any one of claims 1 to 15, wherein the computation of the said depth image data sets involves effective reduction in size of the said perspective images.

18. A method according to any preceding claim, wherein the composite hologram is formed by computing the characteristics of the said individual segment holograms and then physically reproducing them at the hologram formation surface (34).

**19.** A method according to any preceding claim, wherein the composite hologram is formed on an optical modulation device (130) such that the said reproduction light beam can be transmitted thereby to generate the desired image.

**20.** A method according to claim 19, wherein the said optical modulation device (130) includes a liquid crystal layer (360) controlled by application of control voltages to electrodes (346-1 to 346-n), mounted adjacent to the liquid crystal layer, so as to bring about local changes in the refractive index of the liquid crystal.

**21.** A method according to any one of claims 1 to 18, wherein the composite hologram is formed on an optical modulation device such that the said reproduction light beam can be reflected thereby to generate the desired image.

**22.** A method according to claim 21, wherein the said optical modulation device (148) includes a liquid crystal layer (165) which is controlled via local changes in the resistance of a photoconductive layer (156) that is arranged adjacent to the liquid crystal layer (165), which local changes are produced by control of a further light beam (170) incident on the photoconductive layer (156).

**23.** A method according to any one of claims 1 to 18, wherein the composite hologram is formed by fixedly recording the said individual segment holograms sequentially on respective different areas (236) of a hologram recording medium (234), the different areas being arrayed similarly to the said respective viewpoints.

**24.** A method according to claim 23, wherein each of the said individual segment holograms is recorded by exposing the corresponding area (236) of the recording medium (234) in turn to different hologram components which correspond respectively to the said perspective images computed for the viewpoint corresponding to the individual hologram concerned.

**25.** A method according to claim 24, wherein each of the said hologram components is produced by:

positioning an image display panel (232) parallel to the hologram recording medium (234) and at a distance therefrom that is equal to the distance, from the said hologram formation surface, of the individual projection plane corresponding to the perspective image concerned;
causing the display panel (232) to display the perspective image concerned;
directing an illumination light beam (257) via the display panel(232), so as to be modulated by the displayed image, onto that one of the said different areas (236) at which the individual hologram concerned is to be recorded; and
directing a reference light beam (258) onto the said one area (236) so as to interfere there with the modulated illumination light beam.

**26.** A method according to any preceding claim, wherein each of the individual projectiin planes (48, 50, 52) is parallel to the said hologram formation surface.

**27.** A method according to any preceding claim, wherein each individual projection plane (48, 50, 52) is defined so as to be within the spatial zone for which that plane is defined.

**28.** A method according to any preceding claim, followed by a step of irradiating the composite hologram with a reproduction light beam so as to generate the desired stereoscopic image (135).

**29.** A method of generating a colour stereoscopic image, which method comprises producing, by a method according to any one of claims 1 to 27, an individual composite hologram (200, 202, 204) for each colour component (R, G, B) of which the colour stereoscopic image is to be made up, irradiating each such composite hologram with a reproduction light beam of the colour component for which that hologram was produced, and combining resulting light rays emanating from the individual composite holograms (200, 202, 204) to form the desired colour stereoscopic image.

**30.** An apparatus for producing a composite hologram for use in displaying a stereoscopic image of a three-dimensional subject (36, 38, 40) located in an object space extending away from a hologram formation surface (34), which apparatus comprises:

a) data-producing means for providing three-dimensional coordinate data representing the said subject;

b) zone-defining means for defining a series of different spatial zones (42, 44, 46) in the said object space, which zones span respective different ranges of distance from the hologram formation surface and contain respective different constituent parts (36, 38, 40) of the said subject;

c) data division means for deriving, from the said three-dimensional coordinate data, individual three-dimensional coordinate data sets representing respectively the said different constituent parts;

d) projection-plane defining means operable to define for each of the said zones (42, 44, 46) an individual projection plane (48, 50, 52);

e) image-computing means for employing the said three-dimensional coordinate data sets to compute, for each in turn of a multiplicity of preselected different viewpoints (Pi) arrayed over the said hologram formation surface (34), individual depth image data sets representing respective two-dimensional perspective images of the said different constituent parts, each as projected from the viewpoint concerned onto the individual projection plane defined for the zone containing the constituent part concerned; and

f) hologram-forming means for employing the said depth image data sets to form a composite hologram made up of a multiplicity of different areal segments containing respective physical reproductions of individual segment holograms, each of which represents a two-dimensional image that is a combination of all the said perspective images pertaining to an individual one of the said different viewpoints (Pi), which reproductions are arrayed similarly to their respective corresponding viewpoints so that the composite hologram can be irradiated with a reproduction light beam to generate the desired stereoscopic image.

31. An apparatus according to claim 30, wherein the said data-producing means are adapted to compute the said three-dimensional coordinate data from two-dimensional image information obtained by photographing the said subject concerned.

32. An apparatus according to claim 30 or 31, wherein the said hologram-forming means are adapted to form the composite hologram by computing the characteristics of the said individual segment holograms and then physically reproducing them at the hologram formation surface (34).

33. An apparatus according to claim 30, 31 or 32 wherein the said hologram-forming means include an optical modulation device (130), on which the said composite hologram is formed when the apparatus is in use, such that the said reproduction light beam can be transmitted by that device to generate the desired image.

34. An apparatus according to claim 33, wherein the said optical modulation device (130) includes a liquid crystal layer (360) and means for controlling the device by applying control voltages to electrodes (346-1 to 346-n), mounted adjacent to the liquid crystal layer, so as to bring about local changes in the refractive index of the liquid crystal.

35. An apparatus according to claim 30, 31 or 32, wherein the said hologram-forming means include an optical modulation device, on which the said composite hologram is formed when the apparatus is in use, such that the said reproduction light beam can be reflected by that device to generate the desired image.

36. An apparatus according to claim 35, wherein the said optical modulation device (148) includes a liquid crystal layer (165) and means for controlling the device, via local changes in the resistance of a photoconductive layer (156) that is arranged adjacent to the liquid crystal layer (165), by directing a further light beam (170) onto the photoconductive layer (156).

37. An apparatus according to claim 30 or 31, wherein the said hologram-forming means are adapted to record each of the said individual segment holograms in turn by exposing a corresponding individual area (236) of a hologram recording medium (234) to different hologram components which correspond respectively to the said perspective images computed for the viewpoint corresponding to the individual segment hologram concerned.

38. An apparatus according to claim 37, wherein the said hologram-forming means include an image display panel and first and second light sources and are operable to produce each of the said hologram components by:

causing the display panel (232), positioned at a distance from the hologram recording medium (234) that is equal to the distance, from the said hologram formation surface, of the individual projection plane corresponding to the perspective image concerned, to display the perspective image concerned;

directing an illumination light beam (257) from the first light source via the display panel (232), so as to be modulated by the displayed image, onto that one of the corresponding individual areas (236) at which the individual segment hologram concerned is to be recorded; and
directing a reference light beam (258) from the second light source onto the said one individual area (236) so as to interfere there with the modulated illumination light beam.

**Patentansprüche**

1. Verfahren zum Erzeugen eines zusammengesetzten Hologramms zur Verwendung beim Anzeigen eines stereoskopischen Bildes eines dreidimensionalen Gegenstandes (36, 38, 40), der in einem Objektraum liegt, der von einer Hologrammbildungsoberfläche (34) weg verläuft, welches Verfahren enthält:

   a) Erhalten von dreidimensionalen Koordinatendaten, die den besagten Gegenstand repräsentieren,
   b) Definieren einer Serie von verschiedenen Raumzonen (42, 44, 46) in dem besagten Objektraum, welche Zonen jeweilige unterschiedliche Abstandsbereiche von der Hologrammbildungsoberfläche überspannen und jeweilige unterschiedliche Bestandteile des besagten Gegenstandes (36, 38, 40) enthalten,
   c) Erhalten von individuellen dreidimensionalen Koordinatendatensätzen, die jeweils die besagten verschiedenen Bestandteile repräsentieren, von den besagten dreidimensionalen Koordinatendaten,
   d) Definieren einer individuellen Projektionsebene (48, 50, 52) für jede der besagten Zonen (42, 44, 46),
   e) Einsetzen der individuellen, dreidimensionalen Koordinatendatensätze, um für jeden in einer Reihenfolge einer Multiplizität von vorgegebenen verschiedenen Betrachtungspunkten (Pi), die über die besagte Hologrammbildungsoberfläche (34) angeordnet sind, individuelle Tiefenbilddatensätze zu verarbeiten, die jeweilige zweidimensionale perspektivische Bilder der besagten unterschiedlichen Bestandteile repräsentieren, jedes, wie es von dem betroffenen Betrachtungspunkt auf die individuelle Projektionsebene projiziert ist, die für die Zone definiert ist, die das betroffene Bestandteil enthält, und
   f) Einsetzen der besagten Tiefenbilddatensätze in einen Prozeß, ein zusammengesetztes Hologramm zu bilden, das aus einer Multiplizität von verschiedenen Bereichssegmenten besteht, die jeweilige physikalische Reproduktionen von individuellen Segmenthologrammen enthalten, von denen jedes ein zweidimensionales Bild repräsentiert, das eine Kombination von allen den besagten perspektivischen Bildern ist, die zu einem individuellen der besagten verschiedenen Betrachtungspunkte (Pi) gehören, welche Reproduktionen ähnlich ihren jeweiligen entsprechenden Betrachtungspunkten angeordnet sind, so daß das zusammengesetzte Hologramm mit einem Reproduktionslichtstrahl bestrahlt werden kann, um das gewünschte stereoskopische Bild zu erzeugen.

2. Verfahren nach Anspruch 1, wobei wenigstens zwei der besagten verschiedenen Bestandteile (70-1, 70-2) jeweils verschiedene Teile eines einzigen Objektes (70) sind.

3. Verfahren nach Anspruch 1 oder 2, wobei wenigstens eines der besagten verschiedenen Bestandteile eine Mehrzahl von separaten Objekten (96, 98) enthält.

4. Verfahren nach Anspruch 1, wobei die Raumzonen so definiert sind, daß sie jeweilige separate Objekte enthalten, die zusammen den Gegenstand bilden.

5. Verfahren nach Anspruch 1, 2, 3 oder 4, wobei die eine der Raumzonen, die die weiteste von der Hologrammbildungsoberfläche ist, eine Hintergrundzone (86) ist, die sich ins Unendliche erstreckt.

6. Verfahren nach einem der vorhergehenden Ansprüche, wobei die Projektionsebene (48, 50, 52) für jede Zone (42, 44, 46) so definiert ist, daß sie das Gravitationszentrum des Bestandteils (36, 38, 40) enthält, das in der betroffenen Zone liegt.

7. Verfahren nach einem der vorhergehenden Ansprüche, wobei die besagten individuellen Segmenthologramme Phasenhologramme sind.

8. Verfahren nach Anspruch 7, wobei das zusammengesetzte Hologramm auf Lichtmodulationseinrichtungen zum räumlichen Modulieren der Amplitude eines derartigen Reproduktionslichtstrahls gemäß der Phasenverteilung jedes individuellen Segmenthologramms gebildet wird.

9. Verfahren nach einem der vorhergehenden Ansprüche, wobei die besagten dreidimensionalen Koordinatendaten, die den Gegenstand repräsentieren, aus zweidimensionalen Bildinformationen berechnet werden, die durch Photographieren des Gegenstandes erhalten wurden.

10. Verfahren nach Anspruch 9, wobei die besagten dreidimensionalen Koordinatendaten, die den besagten Gegenstand repräsentieren, durch Photographieren des Gegenstandes von einer Multiplizität von verschiedenen Photographierpositionen (Pij) erhalten wurden, die über die besagte Hologrammbildungsoberfläche (34) angeordnet sind.

11. Verfahren nach Anspruch 10, wobei zweidimensionale Bildinformationen betreffend den Gegenstand, wie er von einem Ort zwischen zwei der Photographierpositionen zu sehen ist, durch Interpolationsverarbeitung der zweidimensionalen Bildinformationen erhalten wird, die durch Photographieren des Gegenstandes von den zwei Photographierpositionen erhalten wurden.

12. Verfahren nach Anspruch 10 oder 11, wobei das Photographieren von einer Kameravorrichtung (260) ausgeführt wird, die nacheinander zu jeder der verschiedenen Photographierpositionen bewegt wird.

13. Verfahren nach Anspruch 10 oder 11, wobei das Photographieren durch einzelne Kameravorrichtungen ausgeführt wird, die jeweils an den verschiedenen Photographierpositionen angeordnet sind.

14. Verfahren nach Anspruch 12 oder 13, wobei das Photographieren an jeder der verschiedenen Photographierpositionen in derselben Richtung ausgeführt wird.

15. Verfahren nach Anspruch 12 oder 13, wobei das Photographieren des Bestandteils des besagten Gegenstandes in jeder der besagten Zonen an jeder der verschiedenen Photographierpositionen in einer Richtung hin zu einem vorgegebenen Punkt in dem besagten Objektraum ausgeführt wird, der für jede der verschiedenen Photographierpositionen derselbe ist.

16. Verfahren nach einem der vorhergehenden Ansprüche, wobei die Verarbeitung der Tiefenbilddatensätze eine effektive Vergrößerung der besagten perspektivischen Bilder einschließt.

17. Verfahren nach einem der Ansprüche 1 bis 15, wobei die Verarbeitung der Tiefenbilddatensätze eine effektive Verkleinerung der Größe der besagten perspektivischen Bilder einschließt.

18. Verfahren nach einem der vorhergehenden Ansprüche, wobei das zusammengesetzte Hologramm durch Verarbeiten der Charakteristika der individuellen Segmenthologramme und dann deren physikalische Reproduktion auf der Hologrammbildungsoberfläche (34) gebildet wird.

19. Verfahren nach einem der vorhergehenden Ansprüche, wobei das zusammengesetzte Hologramm auf einer optischen Modulationsvorrichtung (130) gebildet wird, so daß der Reproduktionslichtstrahl transmittiert werden kann, wodurch das gewünschte Bild erzeugt wird.

20. Verfahren nach Anspruch 19, wobei die besagte optische Modulationsvorrichtung (130) eine Flüssigkristallschicht (360) enthält, die durch Anlegen von Steuerspannungen an Elektroden (346-1 bis 346-n) gesteuert wird, die benachbart der Flüssigkristallschicht angeordnet sind, um lokale Änderungen im Brechungsindex des Flüssigkristalls zu verursachen.

21. Verfahren nach einem der Ansprüche 1 bis 18, wobei das zusammengesetzte Hologramm auf einer optischen Modulationsvorrichtung gebildet wird, so daß der Reproduktionslichtstrahl davon reflektiert werden kann, um das gewünschte Bild zu erzeugen.

22. Verfahren nach Anspruch 21, wobei die besagte optische Modulationsvorrichtung (148) eine Flüssigkristallschicht (165) enthält, die durch lokale Änderungen im Widerstand einer photoleitfähigen Schicht (156) gesteuert wird, die benachbart der Flüssigkristallschicht (165) angeordnet ist, welche lokalen Änderungen durch eine Steuerung eines weiteren Lichtstrahls (170) erzeugt werden, der auf die photoleitfähige Schicht (156) einfällt.

23. Verfahren nach einem der Ansprüche 1 bis 18, wobei das zusammengesetzte Hologramm durch fixiertes Aufnehmen der individuellen Segmenthologramme nacheinander auf jeweils verschiedene Bereiche (236) eines Hologrammaufzeichnungsmediums (234) gebildet wird, welche verschiedenen Bereiche ähnlich den jeweiligen Betrachtungspunkten angeordnet sind.

**24.** Verfahren nach Anspruch 23, wobei jedes der besagten individuellen Segmenthologramme aufgezeichnet wird, indem der entsprechende Bereich (236) des Aufzeichnungsmediums (234) aufeinanderfolgend verschiedenen Hologrammkomponenten ausgesetzt wird, die jeweils den perspektivischen Bildern entsprechen, die für den Betrachtungspunkt verarbeitet wurden, der dem betreffenden individuellen Hologramm entspricht.

**25.** Verfahren nach Anspruch 24, wobei jede der besagten Hologrammkomponenten erzeugt wird durch:

Positionieren einer Bildanzeigetafel (232) parallel zum Hologrammaufzeichnungsmedium (234) und in einem Abstand davon, der gleich dem Abstand von der Hologrammbildungsoberfläche der individuellen Projektionsebene ist, die dem betreffenden perspektivischen Bild entspricht,
Veranlassen der Anzeigetafel (232), das betreffende perspektivische Bild anzuzeigen,
Richten eines Bestrahlungslichtstrahls (257) durch die Anzeigetafel (232), so daß er durch das angezeigte Bild moduliert wird, auf den einen der verschiedenen Bereiche (236), auf dem das betreffende individuelle Hologramm aufgezeichnet werden soll, und
Richten eines Referenzlichtstrahls (258) auf den einen Bereich (236), so daß er dort mit dem modulierten Bestrahlungslichtstrahl interferiert.

**26.** Verfahren nach einem der vorhergehenden Ansprüche, wobei jede der individuellen Projektionsebenen (48, 50, 52) parallel zu der besagten Hologrammbildungsoberfläche ist.

**27.** Verfahren nach einem der vorhergehenden Ansprüche, wobei jede individuelle Projektionsebene (48, 50, 52) so definiert ist, daß sie innerhalb der Raumzone ist, für die jene Ebene definiert ist.

**28.** Verfahren nach einem der vorhergehenden Ansprüche, gefolgt durch einen Schritt des Bestrahlens des zusammengesetzten Hologramms mit einem Reproduktionslichtstrahl, um das gewünschte stereoskopische Bild (135) zu erzeugen.

**29.** Verfahren zum Erzeugen eines stereoskopischen Farbbildes, welches Verfahren enthält das Erzeugen, mittels eines Verfahrens gemäß einem der Ansprüche 1 bis 27, eines individuellen zusammengesetzten Hologramms (200, 202, 204) für jede Farbkomponente (R, G, B), aus welcher das stereoskopische Farbbild erzeugt werden soll, Bestrahlen jedes derartigen zusammengesetzten Hologramms mit einem Reproduktionslichtstrahls der Farbkomponente, für welche das Hologramm erzeugt wurde, und Kombinieren resultierender Lichtstrahlen, die von den individuellen zusammengesetzten Hologrammen (200, 202, 204) ausgehen, um das gewünschte stereoskopische Farbbild zu bilden.

**30.** Vorrichtung zum Erzeugen eines zusammengesetzten Hologramms zur Verwendung beim Anzeigen eines stereoskopischen Bildes eines dreidimensionalen Gegenstandes (36, 38, 40), der in einem Objektraum liegt, der von einer Hologrammbildungsoberfläche (34) weg verläuft, welche Vorrichtung enthält:

a) Datenerzeugungseinrichtungen zum Bereitstellen von dreidimensionalen Koordinatendaten, die den besagten Gegenstand repräsentieren,
b) Zonendefiniereinrichtungen zum Definieren einer Serie von verschiedenen Raumzonen (42, 44, 46) in dem besagten Objektraum, welche Zonen jeweilige unterschiedliche Abstandsbereiche von der Hologrammbildungsoberfläche überspannen und jeweilige unterschiedliche Bestandteile (36, 38, 40) des besagten Gegenstandes enthalten,
c) Datenaufteileinrichtungen zum Erhalten von individuellen dreidimensionalen Koordinatendatensätzen, die jeweils die besagten verschiedenen Bestandteile repräsentieren, von den besagten dreidimensionalen Koordinatendaten,
d) Projektionsebenen-Definitionseinrichtungen, die betreibbar sind, um für jede der besagten Zonen (42, 44, 46) eine individuelle Projektionsebene (48, 50, 52) zu definieren,
e) Bildverarbeitungseinrichtungen zum Einsetzen der besagten individuellen, dreidimensionalen Koordinatendatensätze, um für jeden in einer Reihenfolge einer Multiplizität von vorgegebenen verschiedenen Betrachtungspunkten (Pi), die über die besagte Hologrammbildungsoberfläche (34) angeordnet sind, individuelle Tiefenbilddatensätze zu verarbeiten, die jeweilige zweidimensionale perspektivische Bilder der besagten unterschiedlichen Bestandteile repräsentieren, jedes, wie es von dem betroffenen Betrachtungspunkt auf die individuelle Projektionsebene projiziert ist, die für die Zone definiert ist, die das betroffene Bestandteil enthält, und
f) Hologrammbildungseinrichtungen zum Einsetzen der besagten Tiefenbilddatensätze, um ein zusammengesetztes Hologramm zu bilden, das aus einer Multiplizität von verschiedenen Bereichssegmenten besteht, die jeweilige physikalische Reproduktionen von individuellen Segmenthologrammen enthalten, von denen jedes ein zweidimensionales Bild repräsentiert, das eine Kombination von allen den besagten perspektivischen Bildern ist, die zu einem individuellen der verschiedenen besagten Betrachtungspunkte (Pi) gehören, welche Reproduktionen ähnlich ihren jeweiligen entsprechenden Betrachtungspunkten angeordnet sind, so daß das zusammengesetzte Hologramm mit einem Reproduktionslichtstrahl bestrahlt werden kann, um das gewünschte stereoskopische Bild zu erzeugen.

31. Vorrichtung nach Anspruch 30, wobei die Datenerzeugungseinrichtungen ausgelegt sind, um die dreidimensionalen Koordinatendaten von zweidimensionalen Bildinformationen zu berechnen, die durch Photographieren des betreffenden Gegenstandes erhalten wurden.

32. Vorrichtung nach Anspruch 30 oder 31, wobei die besagten Hologrammbildungseinrichtungen ausgelegt sind, um das zusammengesetzte Hologramm durch Verarbeiten der Charakteristika der individuellen Segmenthologramme und dann deren physikalische Reproduktion auf der Hologrammbildungsoberfläche (34) zu bilden.

33. Vorrichtung nach Anspruch 30, 31 oder 32, wobei die besagten Hologrammbildungseinrichtungen eine optische Modulationsvorrichtung (130) enthalten, auf welcher das zusammengesetzte Hologramm gebildet wird, wenn die Vorrichtung in Gebrauch ist, so daß der besagte Reproduktionslichtstrahl durch jene Vorrichtung transmittiert werden kann, um das gewünschte Bild zu erzeugen.

34. Vorrichtung nach Anspruch 33, wobei die optische Modulationsvorrichtung (130) eine Flüssigkristallschicht (360) und Einrichtungen zum Steuern der Vorrichtung durch Anlegen von Steuerspannungen an Elektroden (346-1 bis 346-n) enthält, die benachbart der Flüssigkristallschicht angeordnet sind, um lokale Änderungen im Brechungsindex des Flüssigkristalls zu verursachen.

35. Vorrichtung nach Anspruch 30, 31 oder 32, wobei die besagten Hologrammbildungseinrichtungen eine optische Modulationsvorrichtung enthalten, auf welcher das besagte zusammengesetzte Hologramm gebildet wird, wenn die Vorrichtung in Gebrauch ist, so daß der Reproduktionslichtstrahl von der Vorrichtung reflektiert werden kann, um das gewünschte Bild zu erzeugen.

36. Vorrichtung nach Anspruch 35, wobei die besagte optische Modulationsvorrichtung (148) eine Flüssigkristallschicht (165) und Einrichtungen zum Steuern der Vorrichtung über lokale Änderungen im Widerstand einer photoleitfähigen Schicht (156) enthält, die benachbart der Flüssigkristallschicht (165) angeordnet ist, indem ein weiterer Lichtstrahl (170) auf die photoleitfähige Schicht (156) gerichtet wird.

37. Vorrichtung nach Anspruch 30 oder 31, wobei die Hologrammbildungseinrichtungen ausgelegt sind, um jedes der individuellen Segmenthologramme nacheinander aufzuzeichnen, indem ein entsprechender individueller Bereich (236) eines Hologrammaufzeichnungsmediums (234) verschiedenen Hologrammkomponenten ausgesetzt wird, die jeweils den besagten perspektivischen Bildern entsprechen, die für den Betrachtungspunkt verarbeitet wurden, der dem betreffenden individuellen Segmenthologramm entspricht.

38. Vorrichtung nach Anspruch 37, wobei die Hologrammbildungseinrichtungen eine Bildanzeigetafel und erste und zweite Lichtquellen enthalten und betreibbar sind, um jede der Hologrammkomponenten zu erzeugen durch:

Veranlassen der Anzeigetafel (232), die in einem Abstand von dem Hologrammaufzeichnungsmedium (234) angeordnet ist, der gleich dem Abstand von der Hologrammbildungsoberfläche der individuellen Projektionsebene ist, die dem betreffenden perspektivischen Bild entspricht, zum Anzeigen des betreffenden perspektivischen Bildes,
Richten eines Bestrahlungslichtstrahls (257) von der ersten Lichtquelle durch die Anzeigetafel (232), so daß er durch das angezeigte Bild moduliert wird, auf denjenigen der entsprechenden individuellen Bereiche (236), auf welchen das betreffende individuelle Segmenthologramm aufgezeichnet werden soll, und
Richten eines Referenzlichtstrahls (258) von der zweiten Lichtquelle auf den besagten einen individuellen Bereich (236), so daß er dort mit dem modulierten Bestrahlungslichtstrahl interferiert.

**Revendications**

1. Procédé de production d'un hologramme composite destiné à être utilisé pour l'affichage d'une image stéréosco-

EP 0 589 558 B1

pique d'un sujet tridimensionnel (36, 38, 40) placé dans un espace objet s'étendant depuis une surface (34) de formation d'hologramme, le procédé comprenant :

a) l'obtention de données de coordonnées tridimensionnelles représentant le sujet,

b) la délimitation d'une série de zones spatiales différentes (42, 44, 46) dans ledit espace objet, ces zones recouvrant différentes plages respectives de distance à la surface de formation d'hologramme et contenant des parties constituantes différentes respectives (36, 38, 40) du sujet,

c) la dérivation, à partir des données de coordonnées tridimensionnelles, d'ensembles individuels de données de coordonnées tridimensionnelles représentant respectivement lesdites parties constituantes différentes,

d) la délimitation, pour chacune de ces zones (42, 44, 46), d'un plan individuel de projection (48, 50, 52),

e) l'utilisation des ensembles individuels de données de coordonnées tridimensionnelles pour le calcul, successivement pour chaque point de vue de plusieurs points de vue différents prédéterminés (Pi) disposés au-dessus de la surface de formation d'hologramme (34), d'ensembles individuels de données d'image de profondeur représentant des images bidimensionnelles respectives en perspective des parties constituantes différentes, chacune étant projetée à partir du point de vue concerné sur le plan individuel de projection délimité pour la zone contenant la partie constituante concernée, et

f) l'utilisation des ensembles de données d'image de profondeur dans une opération de formation d'un hologramme composite constitué de plusieurs segments différents de surface contenant des reproductions physiques respectives d'hologrammes de segments individuels, représentant chacun une image bidimensionnelle qui est une combinaison de toutes les images en perspective appartenant à un point de vue individuel parmi lesdits points de vue différents (Pi), les reproductions ayant un arrangement analogue à celui des points de vue respectifs correspondants afin que l'hologramme composite puisse être projeté par un faisceau lumineux de reproduction pour la création de l'image stéréoscopique voulue.

2. Procédé selon la revendication 1, dans lequel deux au moins des parties constituantes différentes (70-1, 70-2) sont des parties respectives différentes d'un seul objet (70).

3. Procédé selon la revendication 1 ou 2, dans lequel l'une au moins desdites parties constituantes différentes comporte plusieurs objets séparés (96, 98).

4. Procédé selon la revendication 1, dans lequel les zones spatiales sont définies de manière qu'elles contiennent des objets séparés respectifs qui constituent ensemble ledit sujet.

5. Procédé selon la revendication 1, 2, 3 ou 4, dans lequel celle des zones spatiales qui est la plus éloignée de la surface de formation d'hologramme est une zone de fond (86) qui s'étend vers l'infini.

6. Procédé selon l'une quelconque des revendications précédentes, dans lequel le plan de projection (48, 50, 52) de chaque zone (42, 44, 46) est défini de manière qu'il contienne le centre de gravité de la partie constituante (36, 38, 40) placée dans la zone concernée.

7. Procédé selon l'une quelconque des revendications précédentes, dans lequel les hologrammes des segments individuels sont des hologrammes de phase.

8. Procédé selon la revendication 7, dans lequel l'hologramme composite est formé sur un dispositif de modulation de lumière pour la modulation spatiale de l'amplitude d'un faisceau de lumière de reproduction d'après la distribution de phase de chaque hologramme d'un segment individuel.

9. Procédé selon l'une quelconque des revendications précédentes, dans lequel les données de coordonnées tridimensionnelles représentant le sujet sont calculées à partir d'informations d'images bidimensionnelles obtenues par photographie du sujet.

10. Procédé selon la revendication 9, dans lequel les données de coordonnées tridimensionnelles représentant le sujet sont obtenues par photographie du sujet à partir de plusieurs positions différentes de photographie (Pij) arrangées sur la surface (34) de formation d'hologramme.

11. Procédé selon la revendication 10, dans lequel les informations d'images bidimensionnelles relatives au sujet observé depuis un emplacement entre deux des positions de photographie sont obtenues par interpolation par le calcul des informations d'images bidimensionnelles obtenues par photographie du sujet à partir des deux positions de photographie.

12. Procédé selon la revendication 10 ou 11, dans lequel la photographie est réalisée par un appareil à caméra (260) qui est déplacé vers chacune des différentes positions successives de photographie.

13. Procédé selon la revendication 10 ou 11, dans lequel la photographie est réalisée par des appareils individuels à caméra disposés respectivement à des positions différentes de photographie.

14. Procédé selon la revendication 12 ou 13, dans lequel la photographie est réalisée dans la même direction à chacune des positions différentes de photographie.

15. Procédé selon la revendication 12 ou 13, dans lequel la photographie de la partie constituante du sujet dans chacune des zones est réalisée, à chacune des positions différentes de photographie, dans la direction d'un point prédéterminé, dans l'espace objet, qui est le même pour chacune des positions différentes de photographie.

16. Procédé selon l'une quelconque des revendications précédentes, dans lequel le calcul des ensembles de données d'image de profondeur comprend un agrandissement efficace des images en perspective.

17. Procédé selon l'une quelconque des revendications 1 à 15, dans lequel le calcul des ensembles de données d'image de profondeur comprend la réduction efficace de dimension des images en perspective.

18. Procédé selon l'une quelconque des revendications précédentes, dans lequel l'hologramme composite est formé par calcul des caractéristiques des hologrammes des segments individuels puis par reproduction physique des hologrammes à la surface (34) de formation d'hologramme.

19. Procédé selon l'une quelconque des revendications précédentes, dans lequel l'hologramme composite est formé sur un appareil de modulation optique (130) afin que le faisceau lumineux de reproduction puisse être transmis de cette manière pour la création de l'image voulue.

20. Procédé selon la revendication 19, dans lequel le dispositif de modulation optique (130) comporte une couche à cristaux liquides (360) commandée par application de tensions de commande à des électrodes (346-1 à 346-n) montées près de la couche cristalline liquide, si bien que des changements locaux d'indice de réfraction de la matière cristalline liquide sont réalisés.

21. Procédé selon l'une quelconque des revendications 1 à 18, dans lequel l'hologramme composite est formé sur un dispositif de modulation optique afin que le faisceau lumineux de reproduction puisse être réfléchi de cette manière pour la création de l'image voulue.

22. Procédé selon la revendication 21, dans lequel le dispositif de modulation optique (148) comporte une couche cristalline liquide (165) qui est commandée par des changements locaux de résistance d'une couche photoconductrice (156) qui est placée près de la couche cristalline liquide (165), les changements locaux étant produits par réglage d'un faisceau lumineux supplémentaire (170) tombant sur la couche photoconductrice (156).

23. Procédé selon l'une quelconque des revendications 1 à 18, dans lequel l'hologramme composite est formé par enregistrement de manière fixe des hologrammes de segments individuels successivement sur des zones respectives différentes (236) d'un support d'enregistrement d'hologramme (234), les zones différentes étant arrangées de la même manière que les points de vue respectifs.

24. Procédé selon la revendication 23, dans lequel chacun des hologrammes des segments individuels est enregistré par exposition de la zone correspondante (236) du support d'enregistrement (234) à son tour à des composantes d'hologrammes différents qui correspondent respectivement aux images en perspective calculées à partir du point de vue correspondant à l'hologramme individuel concerné.

25. Procédé selon la revendication 24, dans lequel chacune des composantes d'hologramme est produite par :

   positionnement d'un panneau d'affichage d'image (232) parallèlement au support d'enregistrement d'hologramme (234) et à une distance de celui-ci qui est égale à la distance à la surface de formation d'hologramme du plan individuel de projection correspondant à l'image en perspective concernée,

affichage par le panneau d'affichage (232) de l'image en perspective concernée,

direction d'un faisceau lumineux d'éclairement (257) par l'intermédiaire du panneau d'affichage (232) afin qu'il soit modulé par l'image affichée sur celle des zones différentes (236) dans laquelle l'hologramme individuel concerné doit être enregistré, et

direction d'un faisceau lumineux de référence (258) sur ladite zone (236) afin qu'il interfère dans celle-ci avec le faisceau lumineux modulé d'éclairement.

26. Procédé selon l'une quelconque des revendications précédentes, dans lequel chacun des plans individuels de projection (48, 50, 52) est parallèle à la surface de formation d'hologramme.

27. Procédé selon l'une quelconque des revendications précédentes, dans lequel chaque plan individuel de projection (48, 50, 52) est défini comme se trouvant dans la zone spatiale pour laquelle ce plan est défini.

28. Procédé selon l'une quelconque des revendications précédentes, suivi d'une étape d'irradiation de l'hologramme composite par un faisceau lumineux de reproduction pour la création de l'image stéréoscopique voulue (135).

29. Procédé de création d'une image stéréoscopique en couleurs, le procédé comprenant la production, par un procédé selon l'une quelconque des revendications 1 à 27, d'un hologramme composite individuel (200, 202, 204) pour chaque composante colorée (R, G, B) dont l'image stéréoscopique en couleurs doit être constituée, l'irradiation de chaque hologramme composite de ce type par un faisceau lumineux de reproduction de la composante colorée pour laquelle l'hologramme a été produit, et la combinaison des rayons lumineux résultants provenant des hologrammes composites individuels (200, 202, 204) pour la formation de l'image stéréoscopique voulue en couleurs.

30. Appareil de production d'un hologramme composite destiné à être utilisé pour l'affichage d'une image stéréoscopique d'un sujet tridimensionnel (36, 38, 40) placé dans un espace objet s'étendant à partir d'une surface (34) de formation d'hologramme, l'appareil comprenant :

a) un dispositif de production de données destiné à produire des données de coordonnées tridimensionnelles représentant ledit sujet,

b) un dispositif de définition de zones destiné à définir une série de zones spatiales différentes (42, 44, 46) dans l'espace objet, ces zones recouvrant des plages différentes respectives de distance à la surface de formation d'hologramme et contenant différentes parties constituantes respectives (36, 38, 40) du sujet,

c) un dispositif de division de données destiné à dériver, à partir des données de coordonnées tridimensionnelles, des ensembles individuels de données de coordonnées tridimensionnelles représentant respectivement lesdites parties constituantes différentes,

d) un dispositif de définition de plans de projection destiné à définir, pour chacune des zones (42, 44, 46) un plan individuel de projection (48, 50, 52),

e) un dispositif de calcul d'image destiné à utiliser les ensembles de données de coordonnées tridimensionnelles pour le calcul, pour chaque point de vue successivement parmi plusieurs points de vue différents prédéterminés (Pi) disposés au-dessus de la surface (34) de formation d'hologramme, d'ensembles individuels de données d'image de profondeur représentant des images bidimensionnelles respectives en perspective desdites parties constituantes différentes, chacune projetée à partir du point de vue concerné sur le plan individuel de projection défini pour la zone contenant la partie constituante concernée, et

f) un dispositif de formation d'hologramme destiné à utiliser les ensembles de données d'image de profondeur pour la formation d'un hologramme composite constitué de plusieurs segments différents de surface contenant des reproductions physiques respectives des hologrammes de segments individuels, chacun représentant une image bidimensionnelle qui est une combinaison de toutes les images en perspective appartenant à un point de vue individuel parmi les points de vue différents (Pi), ces reproductions étant disposées de manière analogue aux points de vue correspondants respectifs afin que l'hologramme composite puisse être éclairé par un faisceau lumineux de reproduction pour la création de l'image stéréoscopique voulue.

31. Appareil selon la revendication 30, dans lequel le dispositif de production de données est destiné à calculer les données de coordonnées tridimensionnelles à partir des informations d'images bidimensionnelles obtenues par photographie du sujet concerné.

32. Appareil selon la revendication 30 ou 31, dans lequel le dispositif de formation d'hologramme est destiné à former l'hologramme composite par calcul des caractéristiques des hologrammes de segments individuels, puis par reproduction physique de ces hologrammes à la surface (34) de formation d'hologramme.

**33.** Appareil selon la revendication 30, 31 ou 32, dans lequel le dispositif de formation d'hologramme contient un dispositif de modulation optique (130) sur lequel est formé l'hologramme composite lorsque l'appareil est utilisé, afin que le faisceau lumineux de reproduction puisse être transmis par ce dispositif pour la création de l'image voulue.

**34.** Appareil selon la revendication 33, dans lequel le dispositif de modulation optique (130) contient une couche cristalline liquide (360) et un dispositif de commande du dispositif par application de tensions de commande à des électrodes (346-1 à 346-n) montées près de la couche cristalline liquide, afin que des changements locaux de l'indice de réfraction de la matière cristalline liquide soient réalisés.

**35.** Appareil selon la revendication 30, 31 ou 32, dans lequel le dispositif de formation d'hologramme contient un dispositif de modulation optique sur lequel l'hologramme composite est formé lorsque l'appareil est utilisé, si bien que le faisceau lumineux de reproduction peut être réfléchi par ce dispositif pour la création de l'image voulue.

**36.** Appareil selon la revendication 35, dans lequel le dispositif de modulation optique (148) comporte une couche cristalline liquide (165) et un dispositif de commande du dispositif de modulation par l'intermédiaire de changements locaux de la résistance d'une couche photoconductrice (156) qui est adjacente à la couche cristalline liquide (165), par direction d'un faisceau lumineux supplémentaire (170) sur la couche photoconductrice (156).

**37.** Appareil selon la revendication 30 ou 31, dans lequel le dispositif de formation d'hologramme est destiné à enregistrer chacun des hologrammes de segments individuels successivement par exposition d'une région individuelle correspondante (236) d'un support d'enregistrement d'hologramme (234) à des composantes différentes d'hologramme qui correspondent respectivement aux images en perspective calculées à partir du point de vue correspondant à l'hologramme du segment individuel concerné.

**38.** Appareil selon la revendication 37, dans lequel le dispositif de formation d'hologramme comporte un panneau d'affichage d'image et une première et une seconde source lumineuse, et est destiné à produire chacune des composantes d'hologramme par :

affichage, par le panneau d'affichage (232) placé à une distance du support d'enregistrement d'hologramme (234) qui est égale à la distance à la surface de formation d'hologramme du plan individuel de projection correspondant à l'image concernée en perspective, de l'image concernée en perspective,
direction d'un faisceau lumineux d'éclairement (257) par la première source lumineuse par l'intermédiaire du panneau d'affichage (232) afin qu'il soit modulé par l'image affichée sur la région, parmi les régions individuelles correspondantes (236), dans laquelle doit être enregistré l'hologramme du segment individuel concerné, et
direction d'un faisceau lumineux de référence (258) de la seconde source lumineuse sur ladite région individuelle (236) afin qu'elle interfère à cet emplacement avec le faisceau lumineux modulé d'éclairement.

# FIG.1

```
        ┌─────────┐
        │  Start  │
        └────┬────┘
             │
             ▼
      ┌──────────────────┐
S1 ──┤ Form 3-dimensional│
      │ information       │
      └────────┬─────────┘
               │
               ▼
      ┌──────────────────┐
S2 ──┤ │  Form  depth  │ │
      │ │  image        │ │
      └──────────────────┘
               │
               ▼
      ┌──────────────────┐
S3 ──┤ Calculate phase   │
      │ distribution      │
      └────────┬─────────┘
               │
               ▼
      ┌──────────────────┐
S4 ──┤ Display  phase     │
      │ distribution      │
      └────────┬─────────┘
               │
               ▼
      ┌──────────────────┐
S5 ──┤ Convert  into optical │
      │ wave front        │
      └────────┬─────────┘
               │
               ▼
        ┌─────────┐
        │   End   │
        └─────────┘
```

# FIG.2

```
                    ┌─ 12
┌───────────────────────────────────────────────────────────┐
│   ┌──────────────────────┐                                 │
│   │ 3-dimensional        │ ⌇ 10                            │
│   │ information          │                                 │
│   │ forming  section     │                                 │
│   └──────────────────────┘                                 │
└───────────────────────────────────────────────────────────┘
                    │
                    ▼
┌───────────────────────────────────────────────────────────┐
│  14        15                                              │
│  ┌──────────────────┐    ┌──────────────────────┐          │
│  │ Depth  image     │    │ Phase  distribution  │          │
│  │ forming  section │───▶│ calculating  section │          │
│  └──────────────────┘    └──────────────────────┘          │
└───────────────────────────────────────────────────────────┘
   16
          ┌──────────────────────────────┴───────────────┐
          ▼                                               ▼
┌─────────────────────────┐          ┌────────────────────────────┐
│  18                     │          │                            │
│  ┌────────────────────┐ │          │                            │
│  │ Phase  distribution│ │          │                            │
│  │ display  section   │ │          │   Hologram  exposing       │
│  └────────────────────┘ │          │   apparatus                │
│          │              │          │                            │
│          ▼              │          │                            │
│  20                     │          │                            │
│  ┌────────────────────┐ │          │                            │
│  │ Optical  wave      │ │          │                            │
│  │ front  converting  │ │          │                            │
│  │ section            │ │          │                            │
│  └────────────────────┘ │          │                            │
└─────────────────────────┘          └────────────────────────────┘
   22                                   24
```

# FIG.3

# FIG.4

# FIG.5

```
        ┌─────────────┐
        │    Start     │
        └──────┬──────┘
               │
               ▼
S1 ──┐  ┌─────────────┐
     │  │ Divide into │
        │   regions   │
        └──────┬──────┘
               │
               ▼
S2 ──┐  ┌─────────────┐
     │  │             │
        │ Form region data │
        └──────┬──────┘
               │
               ▼
S3 ──┐  ┌─────────────┐
     │  │Form depth image│
        └──────┬──────┘
               │
               ▼
        ┌─────────────┐
        │     End      │
        └─────────────┘
```

# FIG.6

# FIG.7

# FIG.8

# FIG.9

EP 0 589 558 B1

# FIG.10

# FIG.11

## FIG.12

## FIG.13

# FIG.14

78

70-10

=

72    74    76

+    +

70-1    70-2    70-3

# FIG.15A

# FIG.15B

# FIG.16A

# FIG.16B

# FIG.17

# FIG.18

## FIG.19

## FIG.20

# FIG.21

# FIG.22

# FIG.23

MOVE TO
NEAR POSITION     STANDARD     MOVE TO
FAR POSITION

# FIG.24

# FIG.25

CONTROLLER

# FIG.26

# FIG.27

# FIG.28

CONTROLLER

LASER LIGHT SOURCE

# FIG.29

# FIG.30

# FIG.31

# FIG.32

# FIG.33

# FIG.34

# FIG.35

# FIG.36

# FIG.37

$T = 1/30\,sec$

$T/3$

$E_R$

$T/3$

$E_G$

$E_B$

# FIG.38

$T = 1/30\,sec$

$E_R, E_G, E_B$

# FIG.39

```
        ┌──────────┐
        │  Start   │
        └──────────┘
             │
             ▼
      ┌──────────────────┐
S1 ─  │ Form             │
      │ 3-dimensional    │ (CAD)
      │ imformation      │
      └──────────────────┘
             │
             ▼
      ┌──────────────────┐
S2 ─  │ Form  depth      │
      │ image            │
      └──────────────────┘
             │
             ▼
      ┌──────────────────┐
S3 ─  │                  │
      │ Expose           │
      │                  │
      └──────────────────┘
             │
             ▼
      ┌──────────────────┐
S4 ─  │ Developing       │
      │ process          │
      └──────────────────┘
             │
             ▼
      ┌──────────────────┐
S5 ─  │ Convert  into    │
      │ optical  wave    │
      │ front            │
      └──────────────────┘
             │
             ▼
        ┌──────────┐
        │   End    │
        └──────────┘
```

FIG.40

```
        ┌─────────┐
        │  Start  │
        └─────────┘
             │
             ▼
S1 ──┐  ┌──────────────────┐
     │  │  Set hologram    │
        │  exposing region │
        └──────────────────┘
             │
             ▼
S2 ──┐  ┌──────────────────┐
     │  │  Set distance    │
        │  between dry plate│
        │  and display     │
        └──────────────────┘
             │
             ▼
S3 ──┐  ┌──────────────────┐
     │  │  Display depth   │
        │  image           │
        └──────────────────┘
             │
             ▼
S4 ──┐  ┌──────────────────┐
     │  │  Interferance    │
        │  exposure        │
        └──────────────────┘
             │
             ▼
S5         ◇ Depth image is end ?
   NO
To next
depth image         │ YES
                    ▼
S6         ◇ Hologram exposing region is end ?
   NO
To next
exposing region     │ YES
                    ▼
             ┌─────────┐
             │   End   │
             └─────────┘
```

# FIG.41

EP 0 589 558 B1

FIG.42A

238    232    234

$Z_1$

FIG.42B

238    232    234

$Z_2$

FIG.42C

238  232    234

$Z_3$

FIG.43

Start

S1 — Input 2-dimensional image

S2 — Form 3-dimensional data from 2-dimensional image

S3 — Form depth image

S4 — Calculate phase distribution

S5 — Display phase distribution

S6 — Convert into optical wave front

End

# FIG.44

# FIG.45

# FIG.46

```
        ┌─────────────┐
        │    Start     │
        └──────┬──────┘
               │
               ▼
S1 ─┐  ┌──────────────────┐
    │  │ Fetch neighboring │
    └──│ 2-dimensional     │
       │ image             │
       └────────┬──────────┘
                │
                ▼
S2 ─┐  ┌──────────────────┐
    │  │ Fetch interval    │
    └──│ between cameras   │
       └────────┬──────────┘
                │
                ▼
        ┌─────────────┐
        │     End      │
        └─────────────┘
```

# FIG.47

Start

S1 — Detect corresponding point (pattern matching)

S2 — 〔every corresponding point〕
Calculate depth information
〈corresponding point,
interval between cameras
⟶ (x, y, z)〉

S3 — All of corresponding points are finished ?

NO → To next corresponding point

YES → End

FIG.48

Start

S1 — Input
2-dimensional
image

S2 — Form 3-dimensional
data from
2-dimensional image

S3 — Form depth
image

S4 — Expose

S5 — Developing
process

S6 — Convert into
optical wave
front

End